# EUROPEAN PATENT APPLICATION

(11) **EP 4 618 165 A1**
(43) Date of publication of application: **17.09.2025**
(21) Application number: 24892488.8
(22) Date of filing: 06.08.2024

(54) **SYSTEM AND METHOD FOR REPAIR-WELDING AND RETURN OF BATTERY CELL TOP COVER AND BATTERY PRODUCTION LINE,**

(30) Priority: 24.01.2024 CN 202410096258
(71) Applicant: Contemporary Amperex Technology Co., Limited, Jiaocheng District Ningde Fujian 352100 (CN)
(72) Inventor: LIAN, Shiyuan, Ningde Fujian 352100 (CN); FAN, Xiang, Ningde Fujian 352100 (CN); CHEN, Jianyun, Ningde Fujian 352100 (CN); YIN, Zeyuan, Ningde Fujian 352100 (CN)
(74) Representative: Kraus & Lederer PartGmbB
(86) International application number: PCT/CN2024/110052
(87) International publication number: WO 2025/156593

(57) **Abstract**

This disclosure provides a cell top cover rewelding reflow system, a method, and a battery production line, relating to the field of battery technology. The cell top cover rewelding reflow system includes a discharge conveyor line a reflow conveyor line and a sorting module An input end of the discharge conveyor line is connected to welding equipment, and an output end extends toward a discharge position; the reflow conveyor line is disposed on one side of the discharge conveyor line and an output end of the reflow conveyor line is connected to the welding equipment; a conveying direction of the discharge conveyor line is opposite to a conveying direction of the reflow conveyor line and the discharge conveyor line and the reflow conveyor line are arranged side by side; the sorting module includes a first frame and a pickup member where the first frame the discharge conveyor line and the reflow conveyor line are relatively fixed, and the pickup member is movably disposed on the first frame to be capable of moving relative to the first frame to positions corresponding to the discharge conveyor line and the reflow conveyor line respectively, to transfer cells on the discharge conveyor line to the reflow conveyor line The cell top cover rewelding reflow system can improve production efficiency. The cell top cover rewelding reflow system is configured to reweld cell top covers.

## Description

### CROSS-REFERENCE TO RELATED APPLICATIONS

This disclosure claims priority to Chinese Patent Application No. 202410096258.X, filed on January 24, 2024, entitled "CELL TOP COVER REWELDING REFLOW SYSTEM, METHOD, AND BATTERY PRODUCTION LINE," which is incorporated herein by reference in its entirety.

### TECHNICAL FIELD

This disclosure relates to the field of battery technology, and more particularly to a cell top cover rewelding reflow system, a method, and a battery production line.

### BACKGROUND

During the manufacturing process of cells, welding the cell housing to the top cover is required, and products with slightly inferior welding quality often emerge during the welding process. In related technologies, products with slightly inferior welding quality are manually transferred to welding equipment for rewelding, resulting in low production efficiency.

### SUMMARY

This disclosure provides a cell top cover rewelding reflow system, a method, and a battery production line, capable of improving production efficiency.

According to a first aspect, this disclosure provides a cell top cover rewelding reflow system, where the cell top cover rewelding reflow system includes a discharge conveyor line, a reflow conveyor line, and a sorting module. An input end of the discharge conveyor line is connected to welding equipment, and an output end extends toward a discharge position; the reflow conveyor line is disposed on one side of the discharge conveyor line, where an output end of the reflow conveyor line is connected to the welding equipment; and a conveying direction of the discharge conveyor line is opposite to a conveying direction of the reflow conveyor line, and the discharge conveyor line and the reflow conveyor line are arranged side by side; and the sorting module includes a first frame and a pickup member, where the first frame, the discharge conveyor line, and the reflow conveyor line are relatively fixed, and the pickup member is movably disposed on the first frame to be capable of moving relative to the first frame to positions corresponding to the discharge conveyor line and the reflow conveyor line, respectively, to transfer cells to be rewelded on the discharge conveyor line to the reflow conveyor line.

By enabling the pickup member to transfer cells to be rewelded on the discharge conveyor line to the reflow conveyor line, the sorting module and the reflow conveyor line can collectively transfer cells to be rewelded on the discharge conveyor line to the welding equipment, allowing the welding equipment to reweld the cells to be rewelded, thereby ensuring welding quality. Transferring cells to be rewelded through the sorting module and the reflow conveyor line reduces manual operations, which is beneficial to improving production efficiency. Moreover, arranging the discharge conveyor line and the reflow conveyor line with opposite conveying directions and side by side is beneficial to reducing the space required for arranging the discharge conveyor line and the reflow conveyor line, which is advantageous for cost savings.

In a possible implementation of this disclosure, the first frame spans between the discharge conveyor line and the reflow conveyor line; where along an arrangement direction of the discharge conveyor line and the reflow conveyor line, the pickup member is slidably connected to the first frame, enabling the pickup member to move to positions aligned with the discharge conveyor line and the reflow conveyor line, respectively, to transfer cells to be rewelded on the discharge conveyor line to the reflow conveyor line.

By slidably connecting the pickup member to the first frame, the pickup member can move to positions aligned with the discharge conveyor line and the reflow conveyor line, respectively, achieving the ability to move to positions corresponding to the discharge conveyor line and the reflow conveyor line, which is beneficial to simplifying the structure of the sorting module.

In a possible implementation of this disclosure, the cell top cover rewelding reflow system further includes a reflow buffer apparatus, where the reflow buffer apparatus is configured to store cells to be rewelded; where the reflow buffer apparatus is located on one side of the discharge conveyor line and on one side of the reflow conveyor line, and is relatively fixed to the first frame; and the pickup member is capable of moving relative to the first frame to a position corresponding to the reflow buffer apparatus to pick up or place cells to be rewelded on the reflow buffer apparatus.

By providing the reflow buffer apparatus, cells can be temporarily stored on the reflow buffer apparatus during the process of transferring cells to be rewelded from the discharge conveyor line to the reflow conveyor line, which is beneficial to improving the consistency of production rhythm. Temporarily storing cells to be rewelded on the reflow buffer apparatus also enables personnel to conveniently perform operations such as inspection on the cells to be rewelded at the reflow buffer apparatus.

In a possible implementation of this disclosure, the welding equipment includes at least two welding stations, each welding station being configured to synchronously weld a corresponding cell top cover to a corresponding cell housing; the reflow conveyor line includes at least two reflow conveyor stations, an output end of each reflow conveyor station being connected to a corresponding welding station to synchronously transfer a corresponding cell to the corresponding welding station; and the pickup member is capable of moving relative to the first frame to positions corresponding to the discharge conveyor line and the reflow conveyor stations, respectively, to transfer cells to be rewelded on the discharge conveyor line to the reflow conveyor stations.

By providing at least two welding stations and at least two reflow conveyor stations, production efficiency is improved. Moreover, since the reflow buffer apparatus can store cells to be rewelded, when a sufficient number of cells are accumulated on the reflow buffer apparatus, the cells to be rewelded can be transferred from the reflow buffer apparatus to the reflow conveyor line, allowing each reflow conveyor station to synchronously transfer a corresponding cell to the corresponding welding station, reducing the idle rate of the reflow conveyor stations, which is beneficial to improving production efficiency.

In a possible implementation of this disclosure, the pickup member includes at least two pickup positions, the number of the pickup positions being equal to the number of the reflow conveyor stations and the pickup positions being arranged in a one-to-one correspondence with the reflow conveyor stations; and each pickup position being relatively fixed and capable of moving relative to the first frame to a position corresponding to a corresponding reflow conveyor station to transfer a corresponding cell to the corresponding reflow conveyor station.

By enabling the pickup member to include at least two pickup positions, the pickup member can synchronously place at least two cells onto corresponding reflow conveyor stations, allowing each reflow conveyor station to synchronously transfer a corresponding cell to a corresponding welding station, which is beneficial to improving production efficiency.

In a possible implementation of this disclosure, the discharge conveyor line includes at least two discharge conveyor stations, each discharge conveyor station being connected to a corresponding welding station to synchronously transfer a corresponding cell from the corresponding welding station; where the number of the discharge conveyor stations is equal to the number of the pickup positions and the discharge conveyor stations are arranged in a one-to-one correspondence with the pickup positions, each pickup position being capable of moving relative to the first frame to a position corresponding to a corresponding discharge conveyor station to pick up a cell from the corresponding discharge conveyor station.

By enabling the discharge conveyor line to include at least two discharge conveyor stations, the efficiency of transferring cells from the welding equipment via the discharge conveyor line is improved, and the efficiency of the pickup member picking up cells from the discharge conveyor line is also enhanced, allowing each pickup position to synchronously pick up a cell from a corresponding discharge conveyor station and synchronously transfer the cell, which is beneficial to improving production efficiency.

In a possible implementation of this disclosure, the cell top cover rewelding reflow system further includes a stopper mechanism, the stopper mechanism having a first posture and a second posture; where in a case of being in the first posture, the stopper mechanism abuts against cells to be rewelded along the conveying direction of the reflow conveyor line to restrict the reflow conveyor line from driving the cells to be rewelded to move; and in a case of being in the second posture, the stopper mechanism avoids the cells to be rewelded, enabling the reflow conveyor line to drive the cells to be rewelded to move.

By providing the stopper mechanism, the movement of cells to be rewelded driven by the reflow conveyor line can be restricted, which is beneficial to improving the consistency of production rhythm.

In a possible implementation of this disclosure, the number of the stopper mechanisms is at least two, the at least two stopper mechanisms being spaced apart along the conveying direction of the reflow conveyor line, and a spacing between two adjacent stopper mechanisms being capable of accommodating a cell to be rewelded.

By providing at least two stopper mechanisms, more cells to be rewelded can be stored on the reflow conveyor line, which is beneficial to improving the consistency of production rhythm.

In a possible implementation of this disclosure, the discharge position includes a good product discharge position and a defective product discharge position; where the cell top cover rewelding reflow system further includes a good product conveyor line, where the good product conveyor line is disposed on one side of the discharge conveyor line, an output end of the good product conveyor line extending to the good product discharge position to transfer cells to the good product discharge position; and the pickup member being capable of moving relative to the first frame to positions corresponding to the discharge conveyor line and the good product conveyor line, respectively, to transfer good product cells from the discharge conveyor line to the good product conveyor line; and/or, the cell top cover rewelding reflow system further includes a defective product conveyor line, where the defective product conveyor line is disposed on one side of the discharge conveyor line, an output end of the defective product conveyor line extending to the defective product discharge position to transfer cells to the defective product discharge position; and the pickup member being capable of moving relative to the first frame to positions corresponding to the discharge conveyor line and the defective product conveyor line, respectively, to transfer defective product cells from the discharge conveyor line to the defective product conveyor line.

By enabling the pickup member to transfer good product cells from the discharge conveyor line to the good product conveyor line and/or transfer defective product cells from the discharge conveyor line to the defective product conveyor line, the pickup member can be used not only for sorting cells to be rewelded but also for sorting good product cells and/or defective product cells, resulting in a high utilization rate of the pickup member, which is beneficial to cost savings. Moreover, using the pickup member for sorting also reduces manual sorting operations, which is advantageous for improving production efficiency.

In a possible implementation of this disclosure, the good product conveyor line and/or the defective product conveyor line is arranged side by side with the discharge conveyor line.

By arranging the good product conveyor line and/or the defective product conveyor line side by side with the discharge conveyor line, the space required for arranging the good product conveyor line, the defective product conveyor line, and the discharge conveyor line is reduced.

In a possible implementation of this disclosure, the cell top cover rewelding reflow system further includes a transplanting conveyor line, where a conveying direction of the transplanting conveyor line, a conveying direction of the good product conveyor line, and a conveying direction of the defective product conveyor line are parallel, the transplanting conveyor line being capable of transferring cells in two opposite directions along an extension path of the transplanting conveyor line; the transplanting conveyor line is disposed at positions corresponding to the good product conveyor line and the defective product conveyor line, and two ends of the transplanting conveyor line are respectively configured to dock with the good product conveyor line and the defective product conveyor line to transfer cells to the good product conveyor line and the defective product conveyor line, respectively; and the pickup member is capable of moving relative to the first frame to positions corresponding to the discharge conveyor line and the transplanting conveyor line, respectively, to transfer cells to the good product conveyor line and the defective product conveyor line via the transplanting conveyor line.

By enabling the transplanting conveyor line to transfer cells in two opposite directions along an extension path of the transplanting conveyor line to the good product conveyor line and the defective product conveyor line, respectively, the space required for arranging the good product conveyor line, the defective product conveyor line, and the discharge conveyor line is reduced, which is beneficial to lowering costs.

In a possible implementation of this disclosure, along an arrangement direction of the good product conveyor line and the discharge conveyor line, a spacing exists between the good product conveyor line and the defective product conveyor line; where the cell top cover rewelding reflow system further includes a second frame, along the arrangement direction of the good product conveyor line and the discharge conveyor line, the second frame spanning between the good product conveyor line and the defective product conveyor line, where the transplanting conveyor line is slidably connected to the second frame to be capable of moving to positions aligned with the good product conveyor line and the defective product conveyor line, respectively, enabling two ends of the transplanting conveyor line to dock with the good product conveyor line and the defective product conveyor line, respectively.

By slidably connecting the transplanting conveyor line to the second frame to move to positions aligned with the good product conveyor line and the defective product conveyor line, respectively, docking with the good product conveyor line and the defective product conveyor line is achieved conveniently, and the structure is relatively simple.

In a possible implementation of this disclosure, the cell top cover rewelding reflow system further includes a good product buffer apparatus, where the good product buffer apparatus is configured to store good product cells; where the good product buffer apparatus is relatively fixed to the first frame; the pickup member being capable of moving relative to the first frame to a position corresponding to the good product buffer apparatus to pick up or place good product cells on the good product buffer apparatus.

By providing the good product buffer apparatus, cells can be temporarily stored on the good product buffer apparatus during the process of transferring good product cells from the discharge conveyor line to the good product conveyor line, which is beneficial to improving the consistency of production rhythm. Temporarily storing good product cells in the good product buffer apparatus also enables personnel to conveniently perform operations such as inspection on the good product cells at the good product buffer apparatus.

In a possible implementation of this disclosure, the number of the good product discharge positions is at least two; where the good product conveyor line includes at least two good product conveyor stations, each good product conveyor station extending to a corresponding good product discharge position to synchronously transfer a corresponding cell to the corresponding good product discharge position; and the pickup member is capable of moving relative to the first frame to positions corresponding to the discharge conveyor line and the good product conveyor stations, respectively, to transfer good product cells from the discharge conveyor line to the good product conveyor stations.

By providing at least two good product conveyor stations, production efficiency is improved. Moreover, since the good product buffer apparatus can store good product cells, when a sufficient number of cells are accumulated on the good product buffer apparatus, the good product cells can be transferred from the good product buffer apparatus to the good product conveyor line, allowing each good product conveyor station to synchronously transfer a corresponding cell to a corresponding good product discharge position, reducing the idle rate of the good product conveyor stations, which is beneficial to improving production efficiency.

In a possible implementation of this disclosure, the pickup member includes at least two pickup positions, the number of the pickup positions being equal to the number of the good product conveyor stations and the pickup positions being arranged in a one-to-one correspondence with the good product conveyor stations; and each pickup position being relatively fixed and capable of moving relative to the first frame to a position corresponding to a corresponding good product conveyor station to transfer a corresponding cell to the corresponding good product conveyor station.

By enabling the pickup member to include at least two pickup positions, the pickup member can synchronously transfer at least two cells to corresponding good product conveyor stations, allowing each good product conveyor station to synchronously transfer a corresponding cell to a corresponding good product discharge position, which is beneficial to improving production efficiency.

In a possible implementation of this disclosure, the discharge conveyor line includes at least two discharge conveyor stations, each discharge conveyor station being connected to the welding equipment to transfer corresponding cells from the welding equipment; the number of the discharge conveyor stations being equal to the number of the pickup positions and the discharge conveyor stations being arranged in a one-to-one correspondence with the pickup positions; and each pickup position being capable of moving relative to the first frame to a position corresponding to a corresponding discharge conveyor station to pick up a cell from the corresponding discharge conveyor station for transfer.

By enabling the discharge conveyor line to include at least two discharge conveyor stations, the efficiency of transferring cells from the welding equipment via the discharge conveyor line is improved, and the efficiency of the pickup member picking up cells from the discharge conveyor line is also enhanced, which is beneficial to improving production efficiency.

According to a second aspect, this disclosure provides a battery production line, where the battery production line includes welding equipment, a discharge conveyor line, a reflow conveyor line, and a sorting module. The welding equipment is configured to weld a cell top cover to a cell housing to form a cell; an input end of the discharge conveyor line is connected to the welding equipment, and an output end of the discharge conveyor line extends toward a discharge position to transfer cells welded by the welding equipment from the welding equipment to the discharge position; the reflow conveyor line is disposed on one side of the discharge conveyor line, and an output end of the reflow conveyor line is connected to the welding equipment to transfer cells to the welding equipment, enabling the welding equipment to weld the cells transferred by the reflow conveyor line; the sorting module includes a first frame and a pickup member, where the first frame, the discharge conveyor line, and the reflow conveyor line are relatively fixed, and the pickup member is movably disposed on the first frame to be capable of moving relative to the first frame to positions corresponding to the discharge conveyor line and the reflow conveyor line, respectively, to transfer cells to be rewelded on the discharge conveyor line to the reflow conveyor line.

By enabling the pickup member to transfer cells to be rewelded on the discharge conveyor line to the reflow conveyor line, the sorting module and the reflow conveyor line can collectively transfer cells to be rewelded on the discharge conveyor line to the welding equipment, allowing the welding equipment to reweld the cells to be rewelded, thereby ensuring welding quality. Transferring cells to be rewelded through the sorting module and the reflow conveyor line reduces manual operations, which is beneficial to improving production efficiency.

According to a third aspect, this disclosure provides a cell top cover rewelding reflow method, where the cell top cover rewelding reflow method is applied to the cell top cover rewelding reflow system provided in the first aspect of this disclosure, and the cell top cover rewelding reflow method includes: controlling an inspection module to inspect a cell welded by the welding equipment; in a case that the inspection module determines that the cell is a cell to be rewelded, controlling the sorting module to transfer the cell from the discharge conveyor line to the reflow conveyor line.

By enabling the sorting module to transfer cells to be rewelded on the discharge conveyor line to the reflow conveyor line based on inspection results of the inspection module, the sorting module and the reflow conveyor line can collectively transfer cells to be rewelded on the discharge conveyor line to the welding equipment, allowing the welding equipment to reweld the cells to be rewelded, thereby ensuring welding quality. Transferring cells to be rewelded through the sorting module and the reflow conveyor line reduces manual operations, which is beneficial to improving production efficiency.

In a possible implementation of this disclosure, in a case that the inspection module determines that the cell is a cell to be rewelded, the cell top cover rewelding reflow method further includes: controlling a manufacturing execution system to generate first marking data based on inspection results of the inspection module, the first marking data corresponding to characteristic information of the cell and indicating that the cell is a cell to be rewelded; where the controlling the sorting module to transfer the cell from the discharge conveyor line to the reflow conveyor line includes: controlling a collector of the sorting module to collect the characteristic information, and in a case that the characteristic information corresponds to the first marking data, controlling the pickup member to transfer the cell from the discharge conveyor line to the reflow conveyor line.

By enabling the sorting module to transfer the cell from the discharge conveyor line to the reflow conveyor line based on the first marking data, control of the sorting module is facilitated to be more convenient and accurate.

In a possible implementation of this disclosure, the cell top cover rewelding reflow method further includes: in a case that the cell to be rewelded is located on the reflow conveyor line, controlling the manufacturing execution system to delete the first marking data of the cell and generate second marking data, the second marking data corresponding to the characteristic information of the cell and indicating that the cell has not been welded.

By controlling the manufacturing execution system to replace the first marking data with the second marking data when the cell to be rewelded is located on the reflow conveyor line, the cell to be rewelded is marked as an unwelded cell once it is on the reflow conveyor line, and the welding equipment can weld the cell based on the second marking data, which is beneficial to simplifying data flow and facilitating control of the circulation of the cell among various modules in the cell top cover rewelding reflow system.

In a possible implementation of this disclosure, the cell top cover rewelding reflow system further includes a reflow buffer apparatus; the reflow conveyor line includes at least two reflow conveyor stations; and the controlling the sorting module to transfer the cell from the discharge conveyor line to the reflow conveyor line includes: controlling the pickup member to pick up the cell on the discharge conveyor line; in a case that a sum of the number of cells to be rewelded on the pickup member and the number of cells to be rewelded on the reflow buffer apparatus is less than the number of the reflow conveyor stations, controlling the pickup member to transfer the cells to be rewelded located on the pickup member to the reflow buffer apparatus; and in a case that the sum of the number of cells to be rewelded on the pickup member and the number of cells to be rewelded on the reflow buffer apparatus is greater than or equal to the number of the reflow conveyor stations, controlling the pickup member to transfer the cells to be rewelded located on the pickup member and the cells to be rewelded on the reflow buffer apparatus to corresponding reflow conveyor stations, or controlling the pickup member to transfer the cells to be rewelded located on the pickup member to corresponding reflow conveyor stations, enabling each reflow conveyor station to synchronously transfer a cell to be rewelded.

By providing at least two reflow conveyor stations, production efficiency is improved. Moreover, since the reflow buffer apparatus can store cells to be rewelded, when a sufficient number of cells are accumulated on the reflow buffer apparatus, the cells to be rewelded can be transferred from the reflow buffer apparatus to the reflow conveyor line, allowing each reflow conveyor station to synchronously transfer a corresponding cell to a corresponding welding station, reducing the idle rate of the reflow conveyor stations, which is beneficial to improving production efficiency.

In a possible implementation of this disclosure, the pickup member includes at least two pickup positions, where the number of the pickup positions being equal to the number of the reflow conveyor stations and the pickup positions being arranged in a one-to-one correspondence with the reflow conveyor stations; where the controlling the pickup member to transfer the cells to be rewelded located on the pickup member and the cells to be rewelded on the reflow buffer apparatus to corresponding reflow conveyor stations includes: controlling the pickup member to pick up the cells to be rewelded on the reflow buffer apparatus, enabling each pickup position to have a cell to be rewelded; and controlling each pickup position to transfer a corresponding cell to be rewelded to a corresponding reflow conveyor station.

By enabling the pickup member to include at least two pickup positions, the pickup member can synchronously place at least two cells onto corresponding reflow conveyor stations, allowing each reflow conveyor station to synchronously transfer a corresponding cell to a corresponding welding station, which is beneficial to improving production efficiency.

In a possible implementation of this disclosure, the cell top cover rewelding reflow system further includes a good product conveyor line and a defective product conveyor line; where the cell top cover rewelding reflow method further includes: in a case that the inspection module determines that the cell is a good product cell, controlling the sorting module to transfer the cell from the discharge conveyor line to the good product conveyor line; and/or, in a case that the inspection module determines that the cell is a defective product cell, controlling the sorting module to transfer the cell from the discharge conveyor line to the defective product conveyor line.

By enabling the pickup member to transfer good product cells from the discharge conveyor line to the good product conveyor line and/or transfer defective product cells from the discharge conveyor line to the defective product conveyor line, the pickup member can be used not only for sorting cells to be rewelded but also for sorting good product cells and/or defective product cells, resulting in a high utilization rate of the pickup member, which is beneficial to cost savings. Moreover, using the pickup member for sorting also reduces manual sorting operations, which is advantageous for improving production efficiency.

In a possible implementation of this disclosure, the cell top cover rewelding reflow system further includes a good product buffer apparatus; and the good product conveyor line includes at least two good product conveyor stations; where the controlling the sorting module to transfer the cell from the discharge conveyor line to the good product conveyor line includes: controlling the pickup member to pick up the cell on the discharge conveyor line; in a case that a sum of the number of good product cells on the pickup member and the number of good product cells on the good product buffer apparatus is less than the number of the good product conveyor stations, controlling the pickup member to transfer the good product cells located on the pickup member to the good product buffer apparatus; and in a case that the sum of the number of good product cells on the pickup member and the number of good product cells on the good product buffer apparatus is greater than or equal to the number of the good product conveyor stations, controlling the pickup member to transfer the good product cells located on the pickup member and the good product cells on the good product buffer apparatus to corresponding good product conveyor stations, or controlling the pickup member to transfer the good product cells located on the pickup member to corresponding good product conveyor stations, enabling each good product conveyor station to synchronously transfer a good product cell.

By providing at least two good product conveyor stations, production efficiency is improved. Moreover, since the good product buffer apparatus can store good product cells, when a sufficient number of cells are accumulated on the good product buffer apparatus, the good product cells can be transferred from the good product buffer apparatus to the good product conveyor line, allowing each good product conveyor station to synchronously transfer a corresponding cell to a corresponding good product discharge position, reducing the idle rate of the good product conveyor stations, which is beneficial to improving production efficiency.

In a possible implementation of this disclosure, the pickup member includes at least two pickup positions, the number of the pickup positions being equal to the number of the good product conveyor stations and the pickup positions are arranged in a one-to-one correspondence with the good product conveyor stations; where the controlling the pickup member to transfer the good product cells located on the pickup member and the good product cells on the good product buffer apparatus to corresponding good product conveyor stations includes: controlling the pickup member to pick up the good product cells on the good product buffer apparatus, enabling each pickup position to have a good product cell; and controlling each pickup position to transfer a corresponding good product cell to a corresponding good product conveyor station.

By enabling the pickup member to include at least two pickup positions, the pickup member can synchronously transfer at least two cells to corresponding good product conveyor stations, allowing each good product conveyor station to synchronously transfer a corresponding cell to a corresponding good product discharge position, which is beneficial to improving production efficiency.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this disclosure. Moreover, throughout the accompanying drawings, the same reference signs represent the same parts. In the accompanying drawings:
FIG. 1 is a schematic structural diagram of a cell top cover rewelding reflow system from a first perspective in some embodiments of this disclosure;
FIG. 2 is a schematic structural diagram of a cell top cover rewelding reflow system from a second perspective in some embodiments of this disclosure;
FIG. 3 is a schematic structural diagram of a sorting module in some embodiments of this disclosure;
FIG. 4 is a schematic structural diagram of a reflow conveyor line in some embodiments of this disclosure;
FIG. 5 is a schematic structural diagram of a transplanting conveyor line disposed on a second frame in some embodiments of this disclosure;
FIG. 6 is a first flowchart of a cell top cover rewelding reflow method in some embodiments of this disclosure;
FIG. 7 is a second flowchart of a cell top cover rewelding reflow method in some embodiments of this disclosure;
FIG. 8 is a third flowchart of a cell top cover rewelding reflow method in some embodiments of this disclosure;
FIG. 9 is a fourth flowchart of a cell top cover rewelding reflow method in some embodiments of this disclosure;
FIG. 10 is a flowchart of a sorting module transferring cells to a reflow conveyor line in some embodiments of this disclosure;
FIG. 11 is a first flowchart of a sorting module sorting good product cells in some embodiments of this disclosure;
FIG. 12 is a flowchart of a sorting module sorting defective product cells in some embodiments of this disclosure;
FIG. 13 is a second flowchart of a sorting module sorting good product cells in some embodiments of this disclosure; and
FIG. 14 is a flowchart of a sorting module transferring cells to a good product conveyor line in some embodiments of this disclosure.

Description of reference signs:
01-cell; 1-reflow conveyor line; 11-output end of reflow conveyor line; 12-reflow conveyor station; 13-first conveyor segment; 14-second conveyor segment; 15-third conveyor segment; 16-fourth conveyor segment; 2-sorting module; 21-first frame; 22-pickup member; 3-discharge conveyor line; 4-reflow buffer apparatus; 5-code scanning device; 61-good product conveyor line; 611-output end of good product conveyor line; 62-defective product conveyor line; 7-transplanting conveyor line; 8-second frame; 9-good product buffer apparatus; 10-cell fixture; a-first direction; b-second direction; and c-vertical direction.

### DESCRIPTION OF EMBODIMENTS

The following describes in detail the embodiments of technical solutions of this disclosure with reference to the accompanying drawings. The following embodiments are merely used to describe technical solutions of this disclosure more explicitly, and therefore they are merely used as examples and do not constitute any limitations on the protection scope of this disclosure.

Unless otherwise defined, meanings of all technical and scientific terms used in this specification are the same as those commonly understood by persons skilled in the art of this disclosure. The terms used in this specification are merely intended to describe specific embodiments, but are not intended to limit this disclosure.

In this specification, reference to "embodiment" means that specific features, structures or characteristics described with reference to the embodiment may be incorporated in at least one embodiment of this disclosure. The word "embodiment" appearing in various positions in the specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, the terms "first", "second", "third" and the like are merely intended to distinguish between objects, and shall not be understood as any indication or implication of relative importance or any implicit indication of the number, sequence or primary-secondary relationship of the technical features indicated. In some embodiments of this disclosure, "first," "second," "third," and the like may also refer to the same object. In the description of the embodiments of this disclosure, "multiple" means two or more, unless otherwise explicitly and specifically stated.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this disclosure, unless otherwise specified and defined explicitly, the technical terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this disclosure as appropriate to specific situations.

In the description of the embodiments of this disclosure, unless otherwise explicitly specified and defined, the term "abut" should be understood in its general sense. It may refer to direct contact, or contact through an intermediate medium layer. It may be contact between two elements with essentially no interaction force, or contact between two elements with interaction force.

The following provides a detailed description of this disclosure.

During the manufacturing process of cells, welding the cell housing to the top cover is required, and products with slightly inferior welding quality often emerge during the welding process. In related technologies, products with slightly inferior welding quality are manually transferred to welding equipment for rewelding, resulting in low production efficiency.

The embodiments of this disclosure provide a cell top cover rewelding reflow system, where the cell top cover rewelding reflow system includes a discharge conveyor line, a reflow conveyor line, and a sorting module. An input end of the discharge conveyor line is connected to welding equipment, and an output end extends toward a discharge position; the reflow conveyor line is disposed on one side of the discharge conveyor line, where an output end of the reflow conveyor line is connected to the welding equipment; and the sorting module includes a first frame and a pickup member, where the first frame, the discharge conveyor line, and the reflow conveyor line are relatively fixed, and the pickup member is movably disposed on the first frame to be capable of moving relative to the first frame to positions corresponding to the discharge conveyor line and the reflow conveyor line, respectively, to transfer cells to be rewelded on the discharge conveyor line to the reflow conveyor line. By enabling the pickup member to transfer cells to be rewelded on the discharge conveyor line to the reflow conveyor line, the sorting module and the reflow conveyor line can collectively transfer cells to be rewelded on the discharge conveyor line to the welding equipment, allowing the welding equipment to reweld the cells to be rewelded, thereby ensuring welding quality. Transferring cells to be rewelded through the sorting module and the reflow conveyor line reduces manual operations, which is beneficial to improving production efficiency.

The cell top cover rewelding reflow system provided by the embodiments of this disclosure can be applied to a battery production line, where the battery production line is configured to produce batteries. A battery may include one or more cells as a single physical module to provide higher voltage and capacity. When multiple cells are present, the multiple cells are connected in series, parallel, or a combination thereof via a busbar component. In the embodiments of this disclosure, the cell may be a secondary battery, where a secondary battery refers to a cell that can be recharged to activate active materials for continued use after discharge. Exemplarily, the cell may be a lithium-ion battery, sodium-ion battery, sodium-lithium-ion battery, lithium metal battery, sodium metal battery, lithium-sulfur battery, magnesium-ion battery, nickel-hydrogen battery, nickel-cadmium battery, lead-acid battery, or the like, which is not limited by the embodiments of this disclosure.

In some embodiments of this disclosure, the battery may be a battery module, where, when multiple cells are present, the multiple cells are arranged and fixed to form a battery module.

In some embodiments of this disclosure, the battery may be a battery pack, where the battery pack includes a box and cells, and the cells or battery module are accommodated in the box.

In some embodiments of this disclosure, the box may serve as part of a chassis structure of a vehicle. For example, part of the box may become at least part of the chassis of a vehicle, or part of the box may become at least parts of a cross beam and longitudinal beam of a vehicle.

In some embodiments of this disclosure, the battery may be an energy storage apparatus. The energy storage apparatus includes an energy storage container, an energy storage electric cabinet, and the like.

The battery in the embodiments of this disclosure can be applied to various electrical devices, such as mobile phones, portable devices, laptops, electric scooters, electric toys, power tools, vehicles, ships, and spacecraft, where spacecraft include airplanes, rockets, space shuttles, spaceships, and the like.

The battery production line provided by the embodiments of this disclosure includes welding equipment and a cell top cover rewelding reflow system. The welding equipment is configured to weld a cell housing and a top cover together to form a cell. Understandably, cells welded by the welding equipment may have slightly inferior welding quality, and such cells require rewelding, referred to as cells to be rewelded.

In the embodiments of this disclosure, the cell housing and the top cover have the same meanings as commonly understood by those skilled in the technical field of this disclosure, where the cell housing is configured to encapsulate components such as an electrode assembly and an electrolyte. The cell housing may be a steel housing, aluminum housing, plastic housing (for example, polypropylene), composite metal housing (for example, copper-aluminum composite housing), aluminum-plastic film, and the like. The cell housing forms an accommodation cavity with an opening, through which a bare cell enters the accommodation cavity, after which the welding equipment welds the cell top cover onto the cell housing, bonding the cell top cover to the opening to seal the accommodation cavity and form a cell.

The following description is provided with reference to the drawings.

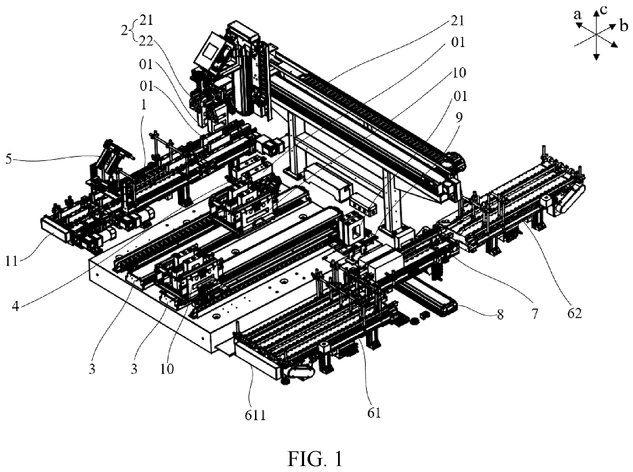

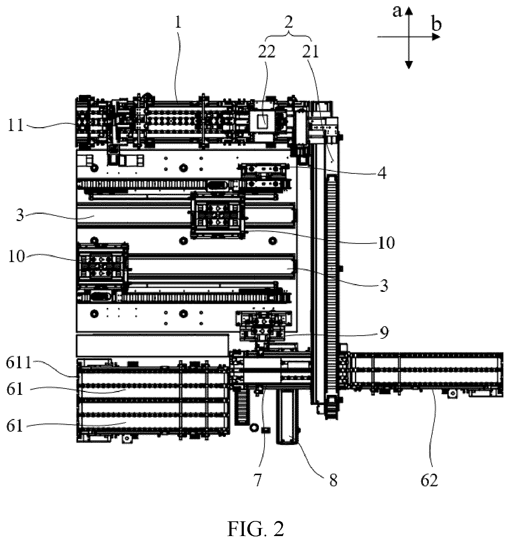

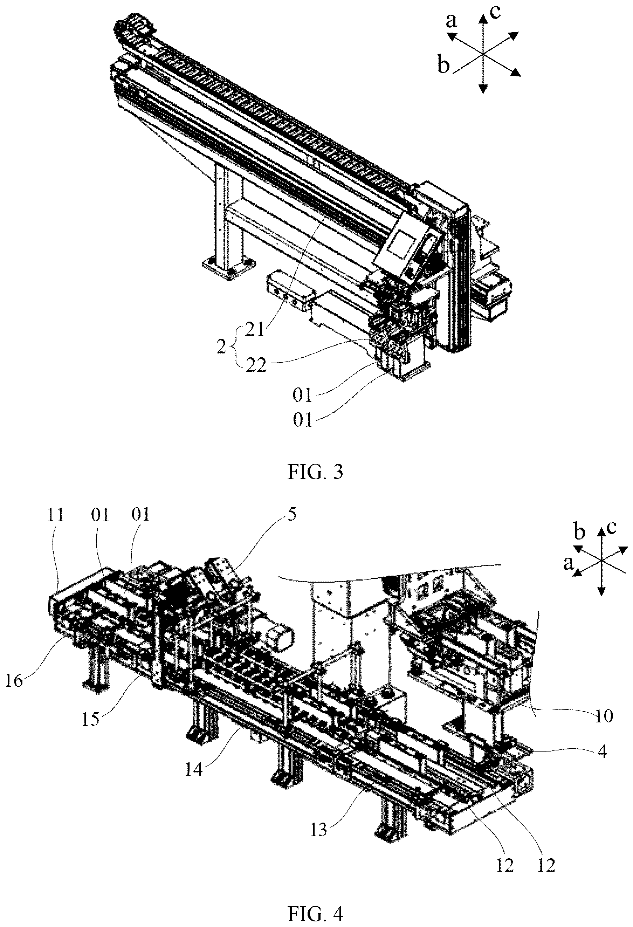

Referring to FIG. 1, FIG. 2, FIG. 3, and FIG. 4, this disclosure provides a cell top cover rewelding reflow system, where the cell top cover rewelding reflow system includes a discharge conveyor line 3, a reflow conveyor line 1, and a sorting module 2. An input end of the discharge conveyor line 3 is connected to welding equipment, and an output end extends toward a discharge position; the reflow conveyor line 1 is disposed on one side of the discharge conveyor line 3, where an output end of the reflow conveyor line 1 is connected to the welding equipment; and the sorting module 2 includes a first frame 21 and a pickup member 22, where the first frame 21, the discharge conveyor line 3, and the reflow conveyor line 1 are relatively fixed, and the pickup member 22 is movably disposed on the first frame 21 to be capable of moving relative to the first frame 21 to positions corresponding to the discharge conveyor line 3 and the reflow conveyor line 1, respectively, to transfer cells to be rewelded on the discharge conveyor line 3 to the reflow conveyor line 1.

In the embodiments of this disclosure, the discharge conveyor line 3 and the reflow conveyor line 1 may have various implementations, such as a conveyor belt or a roller conveyor. The conveyor line is configured to transfer cells 01 from an input end of the conveyor line to an output end of the conveyor line, where the input end of the discharge conveyor line 3 is connected to the welding equipment, and the output end extends toward the discharge position to transfer cells 01 welded by the welding equipment from the welding equipment to the discharge position. The output end 11 of the reflow conveyor line is connected to the welding equipment to transfer cells 01 to the welding equipment, enabling the welding equipment to weld the cells 01 transferred by the reflow conveyor line 1.

In the embodiments of this disclosure, the sorting module 2 is configured to screen out cells to be rewelded on the discharge conveyor line 3 and transfer the cells to be rewelded to the reflow conveyor line 1. Generally, along a conveying direction of the discharge conveyor line 3, the sorting module 2 is disposed corresponding to a middle portion of the discharge conveyor line 3. The discharge conveyor line 3 sequentially transfers multiple cells to be rewelded from the welding equipment to a position corresponding to the sorting module 2, and the sorting module 2 correspondingly sequentially transfers the multiple cells to be rewelded to the reflow conveyor line 1. In some embodiments of this disclosure, referring to FIG. 1, the cell top cover rewelding reflow system further includes an inspection module, where the inspection module is configured to inspect whether a cell 01 welded by the welding equipment is a cell to be rewelded, and the pickup member 22 is configured to transfer the cell to be rewelded from the discharge conveyor line 3 to the reflow conveyor line 1 based on inspection results of the inspection module.

In the embodiments of this disclosure, the pickup member 22 is configured to pick up cells 01 and move relative to the first frame 21 to drive the cells 01 to move relative to the first frame 21, achieving the transfer of the cells 01. The pickup member 22 in the embodiments of this disclosure may have various implementations, for example, a suction cup capable of adsorbing cells 01 to pick up the cells 01 from positions such as the discharge conveyor line 3; or a gripper capable of grasping cells 01 to pick up the cells 01 from positions such as the discharge conveyor line 3.

In the embodiments of this disclosure, the pickup member 22 moving relative to the first frame 21 to positions corresponding to the discharge conveyor line 3 and the reflow conveyor line 1, respectively, to transfer cells to be rewelded on the discharge conveyor line 3 to the reflow conveyor line 1 refers to the pickup member 22 first moving relative to the first frame 21 to a position corresponding to the discharge conveyor line 3 to pick up cells 01 on the discharge conveyor line 3; then moving relative to the first frame 21 to drive the cells 01 to move, causing the cells 01 to be removed from the discharge conveyor line 3; during the movement of the pickup member 22 relative to the first frame 21, the pickup member 22 moves to a position corresponding to the reflow conveyor line 1, at which point the pickup member 22 releases the cells 01, placing the cells 01 onto the reflow conveyor line 1, thereby achieving the transfer of the cells 01 from the discharge conveyor line 3 to the reflow conveyor line 1.

By enabling the pickup member 22 to transfer cells to be rewelded on the discharge conveyor line 3 to the reflow conveyor line 1, the sorting module 2 and the reflow conveyor line 1 can collectively transfer cells to be rewelded on the discharge conveyor line 3 to the welding equipment, allowing the welding equipment to reweld the cells to be rewelded, thereby ensuring welding quality. Transferring cells to be rewelded through the sorting module 2 and the reflow conveyor line 1 reduces manual operations, which is beneficial to improving production efficiency.

In some embodiments of this disclosure, referring to FIG. 1, FIG. 2, FIG. 3, and FIG. 4, a cell fixture 10 is disposed on the discharge conveyor line 3, where the cell fixture 10 can clamp and fix cells 01, and the discharge conveyor line 3 can transfer the cells 01 by transferring the cell fixture 10.

In some embodiments of this disclosure, referring to FIG. 1, FIG. 2, FIG. 3, and FIG. 4, the number of the discharge conveyor lines 3 may be at least two, where the at least two discharge conveyor lines 3 have the same conveying direction and are arranged side by side, and the first frame 21 spans between the at least two discharge conveyor lines 3; where along a direction in which the at least two discharge conveyor lines 3 are arranged side by side, the pickup member 22 is slidably connected to the first frame 21, enabling the pickup member 22 to move to positions aligned with the at least two discharge conveyor lines 3, respectively, to transfer cells to be rewelded on the at least two discharge conveyor lines 3 to the reflow conveyor line 1.

By providing at least two side-by-side discharge conveyor lines 3 and enabling the pickup member 22 to move to positions aligned with the at least two discharge conveyor lines 3 to pick up cells 01, the transfer efficiency of the cells 01 is improved, thereby enhancing production efficiency. In some embodiments of this disclosure, referring to FIG. 1, FIG. 2, FIG. 3, and FIG. 4, the first frame 21 spans between the discharge conveyor line 3 and the reflow conveyor line 1; and along an arrangement direction of the discharge conveyor line 3 and the reflow conveyor line 1, the pickup member 22 is slidably connected to the first frame 21, enabling the pickup member 22 to move to positions aligned with the discharge conveyor line 3 and the reflow conveyor line 1, respectively, to transfer cells to be rewelded on the discharge conveyor line 3 to the reflow conveyor line 1.

In the embodiments of this disclosure, a sliding direction of the pickup member 22 relative to the first frame 21 is the arrangement direction of the discharge conveyor line 3 and the reflow conveyor line 1, referred to as a first direction a for convenience of description.

In the embodiments of this disclosure, the pickup member 22 being capable of moving to positions aligned with the discharge conveyor line 3 and the reflow conveyor line 1, respectively, refers to the pickup member 22 being capable of moving relative to the first frame 21 along the first direction a to positions aligned with the discharge conveyor line 3 and the reflow conveyor line 1, respectively, meaning the pickup member 22 can move relative to the first frame 21 to positions corresponding to the discharge conveyor line 3 and the reflow conveyor line 1, respectively.

By slidably connecting the pickup member 22 to the first frame 21, the pickup member 22 can move to positions aligned with the discharge conveyor line 3 and the reflow conveyor line 1, respectively, achieving the ability to move to positions corresponding to the discharge conveyor line 3 and the reflow conveyor line 1, which is beneficial to simplifying the structure of the sorting module 2.

In some embodiments of this disclosure, referring to FIG. 1, FIG. 2, FIG. 3, and FIG. 4, the first frame 21 spans above the discharge conveyor line 3 and the reflow conveyor line 1 along a vertical direction c, and the pickup member 22 is disposed above the discharge conveyor line 3 and the reflow conveyor line 1 to be capable of picking up cells 01 placed on an upper side of the discharge conveyor line 3 and placing the cells 01 on an upper side of the reflow conveyor line 1, thereby transferring the cells 01 from the discharge conveyor line 3 to the reflow conveyor line 1. This structural form is beneficial to simplifying the structure of the sorting module 2.

In some embodiments of this disclosure, referring to FIG. 1, FIG. 2, FIG. 3, and FIG. 4, the conveying direction of the discharge conveyor line 3 is opposite to the conveying direction of the reflow conveyor line 1, and the discharge conveyor line 3 and the reflow conveyor line 1 are arranged side by side.

In the embodiments of this disclosure, the conveying direction of the discharge conveyor line 3 is parallel to the conveying direction of the reflow conveyor line 1. The conveying direction of the reflow conveyor line 1 is referred to as a second direction b in the figures.

In the embodiments of this disclosure, the discharge conveyor line 3 and the reflow conveyor line 1 being arranged side by side refers to the discharge conveyor line 3 and the reflow conveyor line 1 being arranged along a direction perpendicular to the conveying direction. In some embodiments of this disclosure, the discharge conveyor line 3 and the reflow conveyor line 1 may be arranged along a horizontal direction, meaning the first direction a is a horizontal direction. In some embodiments of this disclosure, the conveying direction of the discharge conveyor line 3 and the reflow conveyor line 1 may both be horizontal directions, meaning the first direction a and the second direction b are both horizontal directions, and the first direction a is perpendicular to the second direction b.

By arranging the discharge conveyor line 3 and the reflow conveyor line 1 with opposite conveying directions and side by side, the space required for arranging the discharge conveyor line 3 and the reflow conveyor line 1 is reduced, which is beneficial to cost savings.

In some embodiments of this disclosure, referring to FIG. 1, FIG. 2, FIG. 3, and FIG. 4, the cell top cover rewelding reflow system further includes a reflow buffer apparatus 4, where the reflow buffer apparatus 4 is configured to store cells to be rewelded; where the reflow buffer apparatus 4 is located on one side of the discharge conveyor line 3 and on one side of the reflow conveyor line 1, and is relatively fixed to the first frame 21; and the pickup member 22 is capable of moving relative to the first frame 21 to a position corresponding to the reflow buffer apparatus 4 to pick up or place cells to be rewelded on the reflow buffer apparatus 4.

By providing the reflow buffer apparatus 4, cells 01 can be temporarily stored on the reflow buffer apparatus 4 during the process of transferring cells to be rewelded from the discharge conveyor line 3 to the reflow conveyor line 1, which is beneficial to improving the consistency of production rhythm. Temporarily storing cells to be rewelded on the reflow buffer apparatus 4 also enables personnel to conveniently perform operations such as inspection on the cells to be rewelded at the reflow buffer apparatus 4.

Exemplarily, the pickup member 22 may first move to a position corresponding to the discharge conveyor line 3 to pick up cells 01, then move to a position corresponding to the reflow buffer apparatus 4 to temporarily store the cells 01, thereby transferring the cells 01 from the discharge conveyor line 3 to the reflow buffer apparatus 4. The pickup member 22 may also first move to a position corresponding to the reflow buffer apparatus 4 to pick up cells 01, then move to a position corresponding to the reflow conveyor line 1 to place the cells 01, thereby transferring the cells 01 from the reflow buffer apparatus 4 to the reflow conveyor line 1.

In some embodiments of this disclosure, referring to FIG. 1, FIG. 2, FIG. 3, and FIG. 4, the discharge conveyor line 3, the reflow conveyor line 1, and the reflow buffer apparatus 4 are arranged along the first direction a. Along the first direction a, the pickup member 22 is slidably connected to the first frame 21, enabling the pickup member 22 to move to positions aligned with the discharge conveyor line 3 and the reflow buffer apparatus 4, respectively, to transfer cells 01 from the discharge conveyor line 3 to the reflow buffer apparatus 4; enabling the pickup member 22 to move to positions aligned with the reflow conveyor line and the reflow buffer apparatus 4, respectively, to transfer cells 01 from the reflow buffer apparatus 4 to the reflow conveyor line 1. This simplifies the structure of the sorting module 2.

In some embodiments of this disclosure, referring to FIG. 1, FIG. 2, FIG. 3, and FIG. 4, along the first direction a, the reflow buffer apparatus 4 may be disposed between the discharge conveyor line 3 and the reflow conveyor line 1. This reduces the movement distance of the pickup member 22 relative to the first frame 21 during the transfer of cells 01, which is beneficial to lowering costs. Of course, in some embodiments of this disclosure, along the first direction a, the discharge conveyor line 3 and the reflow conveyor line 1 may be disposed on the same side of the reflow buffer apparatus 4.

In some embodiments of this disclosure, referring to FIG. 1, FIG. 2, FIG. 3, and FIG. 4, the welding equipment includes at least two welding stations, each welding station being configured to synchronously weld a corresponding cell top cover to a housing of a cell 01; the reflow conveyor line 1 includes at least two reflow conveyor stations 12, an output end of each reflow conveyor station 12 being connected to a corresponding welding station to synchronously transfer a corresponding cell 01 to the corresponding welding station; and the pickup member 22 is capable of moving relative to the first frame 21 to positions corresponding to the discharge conveyor line 3 and the reflow conveyor stations 12, respectively, to transfer cells to be rewelded on the discharge conveyor line 3 to the reflow conveyor stations 12.

In the embodiments of this disclosure, the output end of each reflow conveyor station 12 is the output end 11 of the reflow conveyor line, and the reflow conveyor line 1 transfers cells 01 to the welding equipment, meaning a reflow conveyor station 12 transfers cells 01 to the welding station. Understandably, the conveying direction of each reflow conveyor station 12 is the same, and an arrangement direction of all reflow conveyor stations 12 is perpendicular to the conveying direction. In some embodiments of this disclosure, the arrangement direction of all reflow conveyor stations 12 may be a horizontal direction.

In the embodiments of this disclosure, each reflow conveyor station 12 synchronously transferring a corresponding cell 01 to a corresponding welding station refers to the corresponding cells 01 transferred by all reflow conveyor stations 12 moving synchronously and arriving at the corresponding welding stations synchronously. In the embodiments of this disclosure, each conveyor station belonging to the same conveyor line always moves synchronously, and each conveyor station belonging to the same conveyor line synchronously transferring a corresponding cell to be rewelded refers to all conveyor stations belonging to the same conveyor line synchronously transferring corresponding cells to be rewelded from start to finish.

By providing at least two welding stations and at least two reflow conveyor stations 12, production efficiency is improved. Moreover, since the reflow buffer apparatus 4 can store cells to be rewelded, when a sufficient number of cells 01 are accumulated on the reflow buffer apparatus 4, the cells to be rewelded can be transferred from the reflow buffer apparatus 4 to the reflow conveyor line 1, allowing each reflow conveyor station 12 to synchronously transfer a corresponding cell 01 to the corresponding welding station, reducing the idle rate of the reflow conveyor stations 12, which is beneficial to improving production efficiency.

In some embodiments of this disclosure, referring to FIG. 1, FIG. 2, FIG. 3, and FIG. 4, the reflow buffer apparatus 4 includes reflow buffer positions, where a reflow buffer position is configured to store a corresponding cell 01, the number of cells 01 that the reflow buffer apparatus 4 can store is equal to the number of the reflow buffer positions, and the number of the reflow conveyor stations 12 minus one is less than or equal to the number of the reflow buffer positions. In some embodiments of this disclosure, the number of the reflow conveyor stations 12 may be two, and the number of the reflow buffer positions may be one. This effectively balances cost and production efficiency.

In some embodiments of this disclosure, referring to FIG. 1, FIG. 2, FIG. 3, and FIG. 4, the pickup member 22 includes at least two pickup positions, the number of the pickup positions being equal to the number of the reflow conveyor stations 12 and the pickup positions being arranged in a one-to-one correspondence with the reflow conveyor stations 12; and each pickup position being relatively fixed and capable of moving relative to the first frame 21 to a position corresponding to a corresponding reflow conveyor station 12 to transfer a corresponding cell 01 to the corresponding reflow conveyor station 12.

In the embodiments of this disclosure, the pickup position refers to a portion of the pickup member 22 configured to pick up and transfer cells 01, and the process of the pickup member 22 transferring cells 01 from the discharge conveyor line 3 to the reflow conveyor line 1, as well as from the reflow buffer apparatus 4 to the reflow conveyor line 1, is achieved by the pickup positions.

By enabling the pickup member 22 to include at least two pickup positions, the pickup member 22 can synchronously place at least two cells 01 onto corresponding reflow conveyor stations 12, allowing each reflow conveyor station 12 to synchronously transfer a corresponding cell 01 to a corresponding welding station, which is beneficial to improving production efficiency.

In some embodiments of this disclosure, referring to FIG. 1, FIG. 2, FIG. 3, and FIG. 4, the discharge conveyor line 3 includes at least two discharge conveyor stations, each discharge conveyor station being connected to a corresponding welding station to synchronously transfer a corresponding cell 01 from the corresponding welding station; where the number of the discharge conveyor stations is equal to the number of the pickup positions and the discharge conveyor stations are arranged in a one-to-one correspondence with the pickup positions, each pickup position being capable of moving relative to the first frame 21 to a position corresponding to a corresponding discharge conveyor station to pick up a cell 01 from the corresponding discharge conveyor station.

In the embodiments of this disclosure, an input end of a discharge conveyor station is the input end of the discharge conveyor line 3, and the discharge conveyor line 3 transfers cells 01 from the welding equipment, meaning a discharge conveyor station transfers cells 01 from the welding station. Understandably, the conveying direction of each discharge conveyor station is the same, and an arrangement direction of all discharge conveyor stations is perpendicular to the conveying direction. In some embodiments of this disclosure, the arrangement direction of all discharge conveyor stations may be a horizontal direction.

In the embodiments of this disclosure, each discharge conveyor station synchronously transferring a corresponding cell 01 from a corresponding welding station means that cells 01 welded by all welding stations synchronously enter input ends of the corresponding discharge conveyor stations, and the discharge conveyor stations perform synchronous transfer.

By enabling the discharge conveyor line 3 to include at least two discharge conveyor stations, the efficiency of transferring cells 01 from the welding equipment via the discharge conveyor line 3 is improved, and the efficiency of the pickup member 22 picking up cells 01 from the discharge conveyor line 3 is also enhanced, allowing each pickup position to synchronously pick up a cell 01 from a corresponding discharge conveyor station and synchronously transfer the cell 01, which is beneficial to improving production efficiency.

In some embodiments of this disclosure, referring to FIG. 1, FIG. 2, FIG. 3, and FIG. 4, the cell top cover rewelding reflow system further includes a stopper mechanism, the stopper mechanism having a first posture and a second posture; where in a case of being in the first posture, the stopper mechanism abuts against the cells to be rewelded along the conveying direction of the reflow conveyor line 1 to restrict the reflow conveyor line 1 from driving the cells to be rewelded to move; and in a case of being in the second posture, the stopper mechanism avoids the cells to be rewelded, enabling the reflow conveyor line 1 to drive the cells to be rewelded to move.

By providing the stopper mechanism, the movement of cells to be rewelded driven by the reflow conveyor line 1 can be restricted, which is beneficial to improving the consistency of production rhythm.

In some embodiments of this disclosure, referring to FIG. 1, FIG. 2, FIG. 3, and FIG. 4, the stopper mechanism may include a power cylinder, where an output end of the power cylinder is provided with a stopper piece; when the output end of the power cylinder is in an extended state, the stopper piece abuts against cells 01, meaning the stopper mechanism is in the first posture; when the output end of the power cylinder is in a retracted state, the stopper piece avoids the cells 01, meaning the stopper mechanism is in the second posture.

In some embodiments of this disclosure, referring to FIG. 1, FIG. 2, FIG. 3, and FIG. 4, the number of the stopper mechanisms is at least two, where the at least two stopper mechanisms are spaced apart along the conveying direction of the reflow conveyor line 1, and a spacing between two adjacent stopper mechanisms can accommodate a cell to be rewelded.

By providing at least two stopper mechanisms, more cells to be rewelded can be stored on the reflow conveyor line 1, which is beneficial to improving the consistency of production rhythm.

Exemplarily, in some embodiments of this disclosure, referring to FIG. 1, FIG. 2, FIG. 3, and FIG. 4, the number of the stopper mechanisms is three. Along the conveying direction of the reflow conveyor line 1, the reflow conveyor line 1 includes a first conveyor segment 13, a second conveyor segment 14, a third conveyor segment 15, and a fourth conveyor segment 16 connected in sequence, where the first conveyor segment 13, the second conveyor segment 14, the third conveyor segment 15, and the fourth conveyor segment 16 can each accommodate at least one cell 01; among the three stopper mechanisms, one is disposed between the first conveyor segment 13 and the second conveyor segment 14, another is disposed between the second conveyor segment 14 and the third conveyor segment 15, and yet another is disposed between the third conveyor segment 15. This allows the reflow conveyor line 1 to store more cells 01 with a relatively small number of stopper mechanisms, which is beneficial to reducing costs while ensuring consistency of production rhythm. In some embodiments of this disclosure, the first conveyor segment 13 may be an input end of the reflow conveyor line 1, meaning a portion of the reflow conveyor line 1 configured to pick up cells 01 transferred by the pickup member 22, and the fourth conveyor segment 16 may be an output end of the reflow conveyor segment.

In some embodiments of this disclosure, referring to FIG. 1, FIG. 2, FIG. 3, and FIG. 4, the discharge position includes a good product discharge position and a defective product discharge position; where the cell top cover rewelding reflow system further includes a good product conveyor line 61, where the good product conveyor line 61 is disposed on one side of the discharge conveyor line 3, an output end 611 of the good product conveyor line extending to the good product discharge position to transfer cells 01 to the good product discharge position; and the pickup member 22 being capable of moving relative to the first frame 21 to positions corresponding to the discharge conveyor line 3 and the good product conveyor line 61, respectively, to transfer good product cells from the discharge conveyor line 3 to the good product conveyor line 61; and/or, the cell top cover rewelding reflow system further includes a defective product conveyor line 62, where the defective product conveyor line 62 is disposed on one side of the discharge conveyor line 3, an output end of the defective product conveyor line 62 extending to the defective product discharge position to transfer cells 01 to the defective product discharge position; and the pickup member 22 is capable of moving relative to the first frame 21 to positions corresponding to the discharge conveyor line 3 and the defective product conveyor line 62, respectively, to transfer defective product cells from the discharge conveyor line 3 to the defective product conveyor line 62.

By enabling the pickup member 22 to transfer good product cells from the discharge conveyor line 3 to the good product conveyor line 61 and/or transfer defective product cells from the discharge conveyor line 3 to the defective product conveyor line 62, the pickup member 22 can be used not only for sorting cells to be rewelded but also for sorting good product cells and/or defective product cells, resulting in a high utilization rate of the pickup member 22, which is beneficial to cost savings. Moreover, using the pickup member 22 for sorting also reduces manual sorting operations, which is advantageous for improving production efficiency.

In some embodiments of this disclosure, referring to FIG. 1, FIG. 2, FIG. 3, and FIG. 4, the pickup member 22 may be capable of moving relative to the first frame 21 to positions corresponding to the discharge conveyor line 3, the reflow conveyor line 1, and the good product conveyor line 61, respectively, to transfer cells to be rewelded from the discharge conveyor line 3 to the reflow conveyor line 1 and transfer good product cells from the discharge conveyor line 3 to the good product conveyor line 61. On this basis, the pickup member 22 is slidably connected to the first frame 21, and along the first direction a, the pickup member 22 may be capable of moving relative to the first frame 21 to positions aligned with the discharge conveyor line 3, the reflow conveyor line 1, and the good product conveyor line 61, respectively.

In some embodiments of this disclosure, referring to FIG. 1, FIG. 2, FIG. 3, and FIG. 4, the pickup member 22 may be capable of moving relative to the first frame 21 to positions corresponding to the discharge conveyor line 3, the reflow conveyor line 1, and the defective product conveyor line 62, respectively, to transfer cells to be rewelded from the discharge conveyor line 3 to the reflow conveyor line 1 and transfer defective product cells from the discharge conveyor line 3 to the defective product conveyor line 62. On this basis, the pickup member 22 is slidably connected to the first frame 21, and along the first direction a, the pickup member 22 may be capable of moving relative to the first frame 21 to positions aligned with the discharge conveyor line 3, the reflow conveyor line 1, and the defective product conveyor line 62, respectively.

In some embodiments of this disclosure, referring to FIG. 1, FIG. 2, FIG. 3, and FIG. 4, the good product conveyor line 61 and/or the defective product conveyor line 62 is arranged side by side with the discharge conveyor line 3.

By arranging the good product conveyor line 61 and/or the defective product conveyor line 62 side by side with the discharge conveyor line 3, the space required for arranging the good product conveyor line 61, the defective product conveyor line 62, and the discharge conveyor line 3 is reduced.

In some embodiments of this disclosure, referring to FIG. 1, FIG. 2, FIG. 3, and FIG. 4, an arrangement direction of the good product conveyor line 61 and/or the defective product conveyor line 62 and the discharge conveyor line 3 may be a horizontal direction. This facilitates arrangement.

In some embodiments of this disclosure, referring to FIG. 1, FIG. 2, FIG. 3, and FIG. 4, along the first direction a, the good product conveyor line 61 and the reflow conveyor line 1 are respectively disposed on opposite sides of the discharge conveyor line 3; and/or, the defective product conveyor line 62 and the reflow conveyor line 1 are respectively disposed on opposite sides of the discharge conveyor line 3. This reduces the movement distance of the pickup member 22 relative to the first frame 21 during the transfer of cells 01, which is beneficial to lowering costs. Of course, in some other embodiments of this disclosure, along the first direction a, the good product conveyor line 61 and the reflow conveyor line 1 may be disposed on the same side of the discharge conveyor line 3; and/or, the defective product conveyor line 62 and the reflow conveyor line 1 may be disposed on the same side of the discharge conveyor line 3.

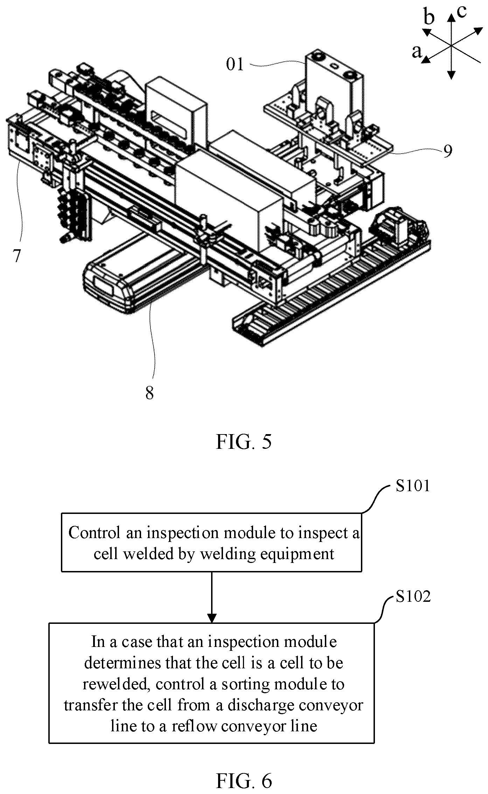

In some embodiments of this disclosure, referring to FIG. 1, FIG. 3, FIG. 4, and FIG. 5, the cell top cover rewelding reflow system further includes a transplanting conveyor line 7, where a conveying direction of the transplanting conveyor line 7, a conveying direction of the good product conveyor line 61, and a conveying direction of the defective product conveyor line 62 are parallel, the transplanting conveyor line 7 being capable of transferring cells 01 in two opposite directions along an extension path of the transplanting conveyor line 7; the transplanting conveyor line 7 is disposed at positions corresponding to the good product conveyor line 61 and the defective product conveyor line 62, and two ends of the transplanting conveyor line 7 are respectively configured to dock with the good product conveyor line 61 and the defective product conveyor line 62 to transfer cells 01 to the good product conveyor line 61 and the defective product conveyor line 62, respectively; and the pickup member 22 is capable of moving relative to the first frame 21 to positions corresponding to the discharge conveyor line 3 and the transplanting conveyor line 7, respectively, to transfer cells 01 to the good product conveyor line 61 and the defective product conveyor line 62 via the transplanting conveyor line 7.

In the embodiments of this disclosure, both ends of the transplanting conveyor line 7 are output ends, and the transplanting conveyor line 7 is capable of transferring cells 01 in two opposite directions along an extension path of the transplanting conveyor line 7, meaning the transplanting conveyor line 7 can transfer cells 01 to the two output ends, respectively, to transfer good product cells to the good product conveyor line 61 and defective product cells to the defective product conveyor line 62.

By enabling the transplanting conveyor line 7 to transfer cells 01 in two opposite directions along an extension path of the transplanting conveyor line 7 to the good product conveyor line 61 and the defective product conveyor line 62, respectively, the space required for arranging the good product conveyor line 61, the defective product conveyor line 62, and the discharge conveyor line 3 is reduced, which is beneficial to lowering costs.

In some embodiments of this disclosure, referring to FIG. 1, FIG. 3, FIG. 4, and FIG. 5, along the first direction a, the transplanting conveyor line 7 and the reflow conveyor line 1 are respectively disposed on opposite sides of the discharge conveyor line 3. This reduces the movement distance of the pickup member 22 relative to the first frame 21 during the transfer of cells 01, which is beneficial to lowering costs.

In some embodiments of this disclosure, referring to FIG. 1, FIG. 3, FIG. 4, and FIG. 5, along an arrangement direction of the good product conveyor line 61 and the discharge conveyor line 3, a spacing exists between the good product conveyor line 61 and the defective product conveyor line 62; where the cell top cover rewelding reflow system further includes a second frame 8, along the arrangement direction of the good product conveyor line 61 and the discharge conveyor line 3, the second frame 8 spanning between the good product conveyor line 61 and the defective product conveyor line 62, where the transplanting conveyor line 7 is slidably connected to the second frame 8 to be capable of moving to positions aligned with the good product conveyor line 61 and the defective product conveyor line 62, respectively, enabling two ends of the transplanting conveyor line 7 to dock with the good product conveyor line 61 and the defective product conveyor line 62, respectively.

By slidably connecting the transplanting conveyor line 7 to the second frame 8 to move to positions aligned with the good product conveyor line 61 and the defective product conveyor line 62, respectively, docking with the good product conveyor line 61 and the defective product conveyor line 62 is achieved conveniently, and the structure is relatively simple.

In some embodiments of this disclosure, referring to FIG. 1, FIG. 2, FIG. 3, and FIG. 4, the number of the good product conveyor lines 61 may be at least two, where the at least two good product conveyor lines 61 have the same conveying direction and are arranged side by side, and the second frame 8 spans between the at least two good product conveyor lines 61; and along a direction in which the at least two good product conveyor lines 61 are arranged side by side, the transplanting conveyor line 7 is slidably connected to the second frame 8, enabling the transplanting conveyor line 7 to move to positions aligned with the at least two good product conveyor lines 61, respectively, to transfer cells to be rewelded on the at least two good product conveyor lines 61 to the reflow conveyor line 1.

By providing at least two side-by-side good product conveyor lines 61 and enabling the transplanting conveyor line 7 to move to positions aligned with the at least two good product conveyor lines 61, respectively, the discharge efficiency of good product cells is improved.

In some embodiments of this disclosure, referring to FIG. 1, FIG. 3, FIG. 4, and FIG. 5, the cell top cover rewelding reflow system further includes a good product buffer apparatus 9, where the good product buffer apparatus 9 is configured to store good product cells; where the good product buffer apparatus 9 is relatively fixed to the first frame 21; the pickup member 22 is capable of moving relative to the first frame 21 to a position corresponding to the good product buffer apparatus 9 to pick up or place good product cells on the good product buffer apparatus 9.

By providing the good product buffer apparatus 9, cells 01 can be temporarily stored on the good product buffer apparatus 9 during the process of transferring good product cells from the discharge conveyor line 3 to the good product conveyor line 61, which is beneficial to improving the consistency of production rhythm. Temporarily storing good product cells in the good product buffer apparatus 9 also enables personnel to conveniently perform operations such as inspection on the good product cells at the good product buffer apparatus 9.

In some embodiments of this disclosure, referring to FIG. 1, FIG. 3, FIG. 4, and FIG. 5, the discharge conveyor line 3, the good product conveyor line 61, and the good product buffer apparatus 9 are arranged along the first direction a. Along the first direction a, the pickup member 22 is slidably connected to the first frame 21, enabling the pickup member 22 to move to positions aligned with the discharge conveyor line 3 and the good product buffer apparatus 9, respectively, to transfer cells 01 from the discharge conveyor line 3 to the good product buffer apparatus 9; enabling the pickup member 22 to move to positions aligned with the reflow conveyor line and the good product buffer apparatus 9, respectively, to transfer cells 01 from the good product buffer apparatus 9 to the good product conveyor line 61. This simplifies the structure of the sorting module 2.

In some embodiments of this disclosure, referring to FIG. 1, FIG. 3, FIG. 4, and FIG. 5, along the first direction a, the good product buffer apparatus 9 may be disposed between the discharge conveyor line 3 and the good product conveyor line 61. This reduces the movement distance of the pickup member 22 relative to the first frame 21 during the transfer of cells 01, which is beneficial to lowering costs.

In some embodiments of this disclosure, referring to FIG. 1, FIG. 3, FIG. 4, and FIG. 5, the number of the good product discharge positions is at least two; where the good product conveyor line 61 includes at least two good product conveyor stations, each good product conveyor station extending to a corresponding good product discharge position to synchronously transfer a corresponding cell 01 to the corresponding good product discharge position; and the pickup member 22 is capable of moving relative to the first frame 21 to positions corresponding to the discharge conveyor line 3 and the good product conveyor stations, respectively, to transfer good product cells from the discharge conveyor line 3 to the good product conveyor stations.

In the embodiments of this disclosure, an output end of a good product conveyor station is the output end 611 of the good product conveyor line, and the good product conveyor line 61 transfers cells 01 to the good product discharge position, meaning a good product conveyor station transfers cells 01 to the good product discharge position. Understandably, the conveying direction of each good product conveyor station is the same, and an arrangement direction of all good product conveyor stations is perpendicular to the conveying direction. In some embodiments of this disclosure, the arrangement direction of all good product conveyor stations may be a horizontal direction.

By providing at least two good product conveyor stations, production efficiency is improved. Moreover, since the good product buffer apparatus 9 can store good product cells, when a sufficient number of cells 01 are accumulated on the good product buffer apparatus 9, the good product cells can be transferred from the good product buffer apparatus 9 to the good product conveyor line 61, allowing each good product conveyor station to synchronously transfer a corresponding cell 01 to a corresponding good product discharge position, reducing the idle rate of the good product conveyor stations, which is beneficial to improving production efficiency.

In some embodiments of this disclosure, referring to FIG. 1, FIG. 3, FIG. 4, and FIG. 5, the good product buffer apparatus 9 includes good product buffer positions, where a good product buffer position is configured to store a corresponding cell 01, the number of cells 01 that the good product buffer apparatus 9 can store is equal to the number of the good product buffer positions, and the number of the good product conveyor stations minus one is less than or equal to the number of the good product buffer positions. In some embodiments of this disclosure, the number of the good product conveyor stations may be two, and the number of the good product buffer positions may be one.

In some embodiments of this disclosure, referring to FIG. 1, FIG. 3, FIG. 4, and FIG. 5, the pickup member 22 includes at least two pickup positions, the number of the pickup positions being equal to the number of the good product conveyor stations and the pickup positions being arranged in a one-to-one correspondence with the good product conveyor stations; and each pickup position being relatively fixed and capable of moving relative to the first frame 21 to a position corresponding to a corresponding good product conveyor station to transfer a corresponding cell 01 to the corresponding good product conveyor station.

By enabling the pickup member 22 to include at least two pickup positions, the pickup member 22 can synchronously transfer at least two cells 01 to corresponding good product conveyor stations, allowing each good product conveyor station to synchronously transfer a corresponding cell 01 to a corresponding good product discharge position, which is beneficial to improving production efficiency.

In some embodiments of this disclosure, referring to FIG. 1, FIG. 3, FIG. 4, and FIG. 5, the discharge conveyor line 3 includes at least two discharge conveyor stations, each discharge conveyor station being connected to the welding equipment to transfer corresponding cells 01 from the welding equipment; the number of the discharge conveyor stations being equal to the number of the pickup positions and the discharge conveyor stations being arranged in a one-to-one correspondence with the pickup positions, and each pickup position being capable of moving relative to the first frame 21 to a position corresponding to a corresponding discharge conveyor station to pick up a cell 01 from the corresponding discharge conveyor station for transfer.

By enabling the discharge conveyor line 3 to include at least two discharge conveyor stations, the efficiency of transferring cells 01 from the welding equipment via the discharge conveyor line 3 is improved, and the efficiency of the pickup member 22 picking up cells 01 from the discharge conveyor line 3 is also enhanced, which is beneficial to improving production efficiency.

In some embodiments of this disclosure, referring to FIG. 1, FIG. 3, FIG. 4, and FIG. 5, on the basis of including the transplanting conveyor line 7, in some embodiments of this disclosure, the transplanting conveyor line 7 includes at least two transplanting conveyor stations, where the number of the transplanting conveyor stations is equal to the number of the good product conveyor stations and the transplanting conveyor stations are arranged in a one-to-one correspondence with the good product conveyor stations. The pickup member 22 transfers good product cells to the good product conveyor stations via corresponding transplanting conveyor stations.

This disclosure also provides a cell top cover rewelding reflow method, where the cell top cover rewelding reflow method is applied to the cell top cover rewelding reflow system provided by this disclosure. Referring to FIG. 1, FIG. 4, and FIG. 6, the cell top cover rewelding reflow method includes:
S101. Control an inspection module to inspect a cell welded by the welding equipment;
S102. In a case that the inspection module determines that the cell is a cell to be rewelded, control the sorting module to transfer the cell from the discharge conveyor line to the reflow conveyor line.

By enabling the pickup member 22 to transfer cells to be rewelded on the discharge conveyor line 3 to the reflow conveyor line 1, the sorting module 2 and the reflow conveyor line 1 can collectively transfer cells to be rewelded on the discharge conveyor line 3 to the welding equipment, allowing the welding equipment to reweld the cells to be rewelded, thereby ensuring welding quality. Transferring cells to be rewelded through the sorting module 2 and the reflow conveyor line 1 reduces manual operations, which is beneficial to improving production efficiency.

In some embodiments of this disclosure, in a case that the inspection module determines that the cell is a cell to be rewelded, the cell top cover rewelding reflow method further includes: controlling a manufacturing execution system to generate first marking data based on inspection results of the inspection module, the first marking data corresponding to characteristic information of the cell and indicating that the cell is a cell to be rewelded; and controlling the sorting module 2 to transfer the cell from the discharge conveyor line 3 to the reflow conveyor line 1, including: controlling a collector of the sorting module 2 to collect the characteristic information, and in a case that the characteristic information corresponds to the first marking data, controlling the pickup member 22 to transfer the cell from the discharge conveyor line 3 to the reflow conveyor line 1.

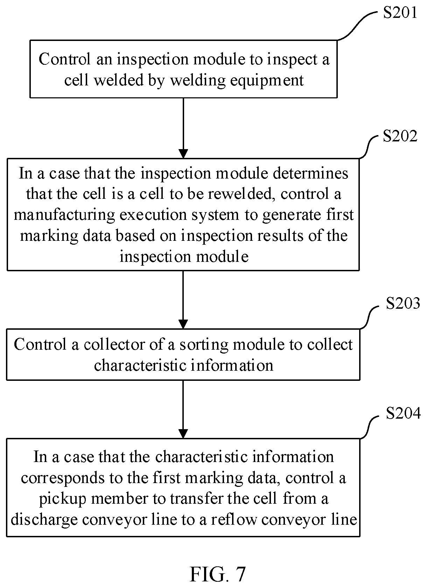

In this embodiment, referring to FIG. 1, FIG. 4, and FIG. 7, the cell top cover rewelding reflow method includes:
S201. Control an inspection module to inspect a cell welded by the welding equipment;
S202. In a case that the inspection module determines that the cell is a cell to be rewelded, control a manufacturing execution system to generate first marking data based on inspection results of the inspection module;
S203. Control a collector of the sorting module to collect characteristic information; and
S204. In a case that the characteristic information corresponds to the first marking data, control the pickup member to transfer the cell from the discharge conveyor line to the reflow conveyor line.

By enabling the sorting module 2 to transfer the cell from the discharge conveyor line 3 to the reflow conveyor line 1 based on the first marking data, control of the sorting module 2 is facilitated to be more convenient and accurate.

In some embodiments of this disclosure, the collector may be a camera, and the characteristic information may be a code of the cell or the like.

In some embodiments of this disclosure, the cell top cover rewelding reflow method further includes: in a case that the cell to be rewelded is located on the reflow conveyor line 1, controlling the manufacturing execution system to delete the first marking data of the cell and generate second marking data, the second marking data corresponding to the characteristic information of the cell and indicating that the cell has not been welded.

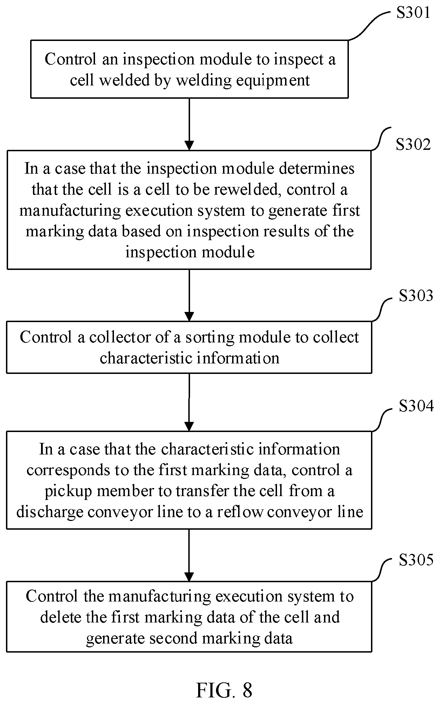

In this embodiment, referring to FIG. 1, FIG. 4, and FIG. 8, the cell top cover rewelding reflow method includes:
S301. Control an inspection module to inspect a cell welded by the welding equipment;
S302. In a case that the inspection module determines that the cell is a cell to be rewelded, control a manufacturing execution system to generate first marking data based on inspection results of the inspection module;
S303. Control a collector of the sorting module to collect characteristic information;
S304. In a case that the characteristic information corresponds to the first marking data, control the pickup member to transfer the cell from the discharge conveyor line to the reflow conveyor line; and
S305. Control the manufacturing execution system to delete the first marking data of the cell and generate second marking data.

By controlling the manufacturing execution system to replace the first marking data with the second marking data when the cell to be rewelded is located on the reflow conveyor line 1, the cell to be rewelded is marked as an unwelded cell 01 once it is on the reflow conveyor line 1, and the welding equipment can weld the cell 01 based on the second marking data, which is beneficial to simplifying data flow and facilitating control of the circulation of the cell 01 among various modules in the cell top cover rewelding reflow system.

In some embodiments of this disclosure, the cell top cover rewelding reflow system further includes a code scanning device 5, where the code scanning device 5 is disposed on the reflow conveyor line 1, and the code scanning device 5 is configured to scan codes of cells to be rewelded on the reflow conveyor line 1 to generate the second marking data. In some embodiments of this disclosure, the code scanning device 5 is disposed corresponding to one stopper mechanism, enabling the stopper mechanism to limit the cell 01 to a position corresponding to the code scanning device when the stopper mechanism is in the first posture, facilitating code scanning by the code scanning device 5.

In some embodiments of this disclosure, the cell top cover rewelding reflow system further includes a reflow buffer apparatus 4; the reflow conveyor line 1 includes at least two reflow conveyor stations 12; and the controlling the sorting module 2 to transfer the cell from the discharge conveyor line 3 to the reflow conveyor line 1 includes: controlling the pickup member 22 to pick up the cell on the discharge conveyor line 3; in a case that a sum of the number of cells to be rewelded on the pickup member 22 and the number of cells to be rewelded on the reflow buffer apparatus 4 is less than the number of the reflow conveyor stations 12, controlling the pickup member 22 to transfer the cells to be rewelded located on the pickup member 22 to the reflow buffer apparatus 4; and in a case that the sum of the number of cells to be rewelded on the pickup member 22 and the number of cells to be rewelded on the reflow buffer apparatus 4 is greater than or equal to the number of the reflow conveyor stations 12, controlling the pickup member 22 to transfer the cells to be rewelded located on the pickup member 22 and the cells to be rewelded on the reflow buffer apparatus 4 to corresponding reflow conveyor stations 12, or controlling the pickup member 22 to transfer the cells to be rewelded located on the pickup member 22 to corresponding reflow conveyor stations 12, enabling each reflow conveyor station 12 to synchronously transfer a cell to be rewelded. For convenience of description, the sum of the number of cells to be rewelded on the pickup member 22 and the number of cells to be rewelded on the reflow buffer apparatus 4 is referred to below as a first quantity, and the number of the reflow conveyor stations 12 is referred to as a second quantity.

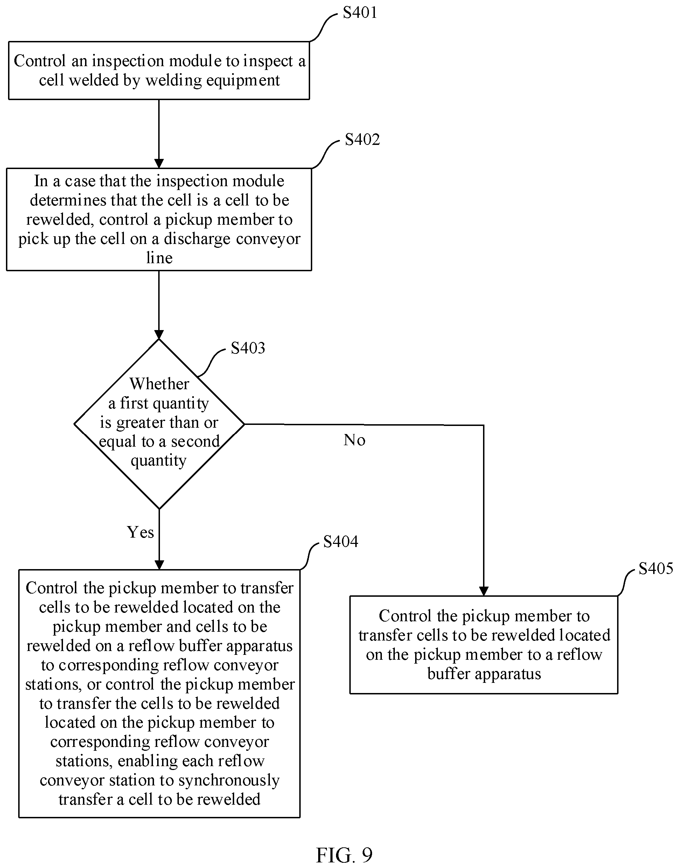

In this embodiment, referring to FIG. 1, FIG. 4, and FIG. 9, the cell top cover rewelding reflow method includes:
S401. Control an inspection module to inspect a cell welded by the welding equipment;
S402. In a case that the inspection module determines that the cell is a cell to be rewelded, control the pickup member to pick up the cell on the discharge conveyor line;
S403. Determine whether the first quantity is greater than or equal to the second quantity;
S404. If yes, control the pickup member to transfer the cells to be rewelded located on the pickup member and the cells to be rewelded on the reflow buffer apparatus to corresponding reflow conveyor stations, or control the pickup member to transfer the cells to be rewelded located on the pickup member to corresponding reflow conveyor stations, enabling each reflow conveyor station to synchronously transfer a cell to be rewelded; and
S405. If no, control the pickup member to transfer the cells to be rewelded located on the pickup member to the reflow buffer apparatus.

In this embodiment, the pickup member 22 transferring the cells to be rewelded located on the pickup member 22 and the cells to be rewelded on the reflow buffer apparatus 4 to corresponding reflow conveyor stations 12, enabling each reflow conveyor station 12 to synchronously transfer a cell to be rewelded, or the pickup member 22 transferring the cells to be rewelded located on the pickup member 22 to corresponding reflow conveyor stations 12, enabling each reflow conveyor station 12 to synchronously transfer a cell to be rewelded, means that during this process, the pickup member 22 transfers a number of cells to be rewelded equal to the number of the reflow conveyor stations 12 with a one-to-one correspondence, placing the cells to be rewelded onto corresponding reflow conveyor stations 12, enabling each reflow conveyor station 12 to synchronously transfer a cell 0 1 so that the cells 01 synchronously arrive at the welding equipment.

Understandably, in the embodiments of this disclosure, in a case that the first quantity is less than the second quantity, the pickup member 22 transfers the cells to be rewelded located on the pickup member 22 to the reflow buffer apparatus 4, enabling the reflow buffer apparatus 4 to accumulate cells, and thereafter continues to pick up cells to be rewelded on the discharge conveyor line 3 until the reflow buffer apparatus 4 accumulates a sufficient number of cells, meaning until the first quantity is greater than or equal to the second quantity, at which point the pickup member 22 transfers the cells to be rewelded located on the pickup member 22 and the cells to be rewelded on the reflow buffer apparatus 4 to corresponding reflow conveyor stations 12, enabling each reflow conveyor station 12 to synchronously transfer a cell 01, reducing the situation where some reflow conveyor stations 12 transfer cells while others do not, thereby reducing the idle rate of the reflow conveyor stations.

Understandably, in the embodiments of this disclosure, after the pickup member 22 picks up the cells on the discharge conveyor line 3, the number of cells on the pickup member 22 may directly equal the number of the reflow conveyor stations 12, meaning there are sufficient cells to be rewelded on the discharge conveyor line 3, and the pickup member 22 does not need to pick up cells from the reflow buffer apparatus 4 but directly picks up a number of cells to be rewelded equal to the number of the reflow conveyor stations 12 from the reflow conveyor stations 12, meaning the pickup member 22 transfers the cells to be rewelded located on the pickup member 22 to corresponding reflow conveyor stations 12, enabling each reflow conveyor station 12 to synchronously transfer a cell to be rewelded, in which case the pickup member 22 does not transfer the cells accumulated on the reflow buffer apparatus 4.

By providing at least two welding stations and at least two reflow conveyor stations 12, production efficiency is improved. Moreover, since the reflow buffer apparatus 4 can store cells to be rewelded, when a sufficient number of cells 01 are accumulated on the reflow buffer apparatus 4, the cells to be rewelded can be transferred from the reflow buffer apparatus 4 to the reflow conveyor line 1, allowing each reflow conveyor station 12 to synchronously transfer a corresponding cell 01 to a corresponding welding station, reducing the idle rate of the reflow conveyor stations 12, which is beneficial to improving production efficiency.

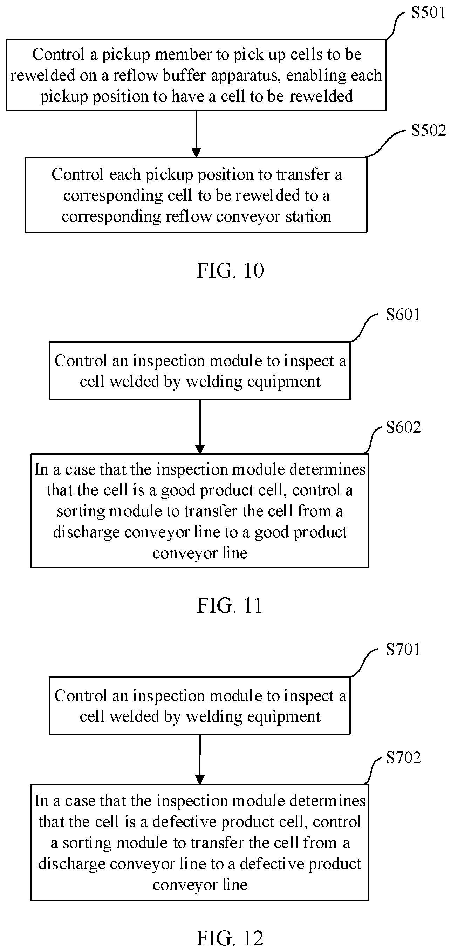

In some embodiments of this disclosure, referring to FIG. 1, FIG. 4, and FIG. 10, the pickup member 22 includes at least two pickup positions, where the number of the pickup positions is equal to the number of the reflow conveyor stations 12 and the pickup positions are arranged in a one-to-one correspondence with the reflow conveyor stations;

Controlling the pickup member 22 to transfer the cells to be rewelded located on the pickup member 22 and the cells to be rewelded on the reflow buffer apparatus 4 to corresponding reflow conveyor stations 12 includes:
S501. Control the pickup member to pick up the cells to be rewelded on the reflow buffer apparatus, enabling each pickup position to have a cell to be rewelded; and
S502. Control each pickup position to transfer a corresponding cell to be rewelded to a corresponding reflow conveyor station.

In the embodiments of this disclosure, after the pickup member 22 picks up the cell on the discharge conveyor line 3, the pickup member 22 may first place the cell onto the reflow buffer apparatus 4 and then pick up cells from the reflow buffer apparatus 4, or may not place the cell onto the reflow buffer apparatus 4 but instead maintain the grasped state of the cell while picking up cells from the reflow buffer apparatus 4 until each pickup position has a cell.

By enabling the pickup member 22 to include at least two pickup positions, the pickup member 22 can synchronously place at least two cells 01 onto corresponding reflow conveyor stations 12, allowing each reflow conveyor station 12 to synchronously transfer a corresponding cell 01 to a corresponding welding station, which is beneficial to improving production efficiency.

In some embodiments of this disclosure, for controlling the pickup member 22 to transfer the cells to be rewelded located on the pickup member 22 to corresponding reflow conveyor stations 12, specifically, the discharge conveyor line 3 includes at least two discharge conveyor stations, where each discharge conveyor station is connected to a corresponding welding station to synchronously transfer a corresponding cell 01 from the corresponding welding station; the number of the discharge conveyor stations is equal to the number of the pickup positions and the discharge conveyor stations are arranged in a one-to-one correspondence with the pickup positions, and each pickup position is capable of moving relative to the first frame 21 to a position corresponding to a corresponding discharge conveyor station to pick up a cell 01 from the corresponding discharge conveyor station; and in a case that the inspection module detects that cells 01 synchronously welded by all welding stations at one time are all cells to be rewelded, controlling the sorting module 2 to transfer the cells from the discharge conveyor line 3 to the reflow conveyor line 1 includes: controlling each pickup position to synchronously pick up a cell to be rewelded from a corresponding discharge conveyor station, enabling each pickup position to have a cell to be rewelded; and controlling each pickup position to transfer a corresponding cell to be rewelded to a corresponding reflow conveyor station 12.

By enabling the discharge conveyor line 3 to include at least two discharge conveyor stations, the efficiency of transferring cells 01 from the welding equipment via the discharge conveyor line 3 is improved, and the efficiency of the pickup member 22 picking up cells 01 from the discharge conveyor line 3 is also enhanced, which is beneficial to improving production efficiency.

In some embodiments of this disclosure, the cell top cover rewelding reflow system further includes a good product conveyor line 61 and a defective product conveyor line 62. Referring to FIG. 1, FIG. 4, and FIG. 11, in some embodiments of this disclosure, the cell top cover rewelding reflow method includes:
S601. Control an inspection module to inspect a cell welded by the welding equipment; and
S602. In a case that the inspection module determines that the cell is a good product cell, control the sorting module to transfer the cell from the discharge conveyor line to the good product conveyor line.

Referring to FIG. 1, FIG. 4, and FIG. 12, in some embodiments of this disclosure, the cell top cover rewelding reflow method includes:
S701. Control an inspection module to inspect a cell welded by the welding equipment; and
S702. In a case that the inspection module determines that the cell is a defective product cell, control the sorting module to transfer the cell from the discharge conveyor line to the defective product conveyor line.

Generally, welding quality issues after top cover welding typically include the following: weld omission, weld deviation, weld breakage, weld spatter, pinholes, surface irregularities, burrs, and poor flanging. Among these, weld omission, weld deviation, and weld breakage can be repaired by rewelding, while weld spatter, pinholes, surface irregularities, burrs, and poor flanging are difficult to repair by rewelding. Cells 01 with issues of weld omission, weld deviation, and weld breakage may be determined as cells to be rewelded, while cells 01 with issues of weld spatter, pinholes, surface irregularities, burrs, and poor flanging may be determined as defective product cells and transferred to the defective product discharge position.

By enabling the pickup member 22 to transfer good product cells from the discharge conveyor line 3 to the good product conveyor line 61 and/or transfer defective product cells from the discharge conveyor line 3 to the defective product conveyor line 62, the pickup member 22 can be used not only for sorting cells to be rewelded but also for sorting good product cells and/or defective product cells, resulting in a high utilization rate of the pickup member 22, which is beneficial to cost savings. Moreover, using the pickup member 22 for sorting also reduces manual sorting operations, which is advantageous for improving production efficiency.

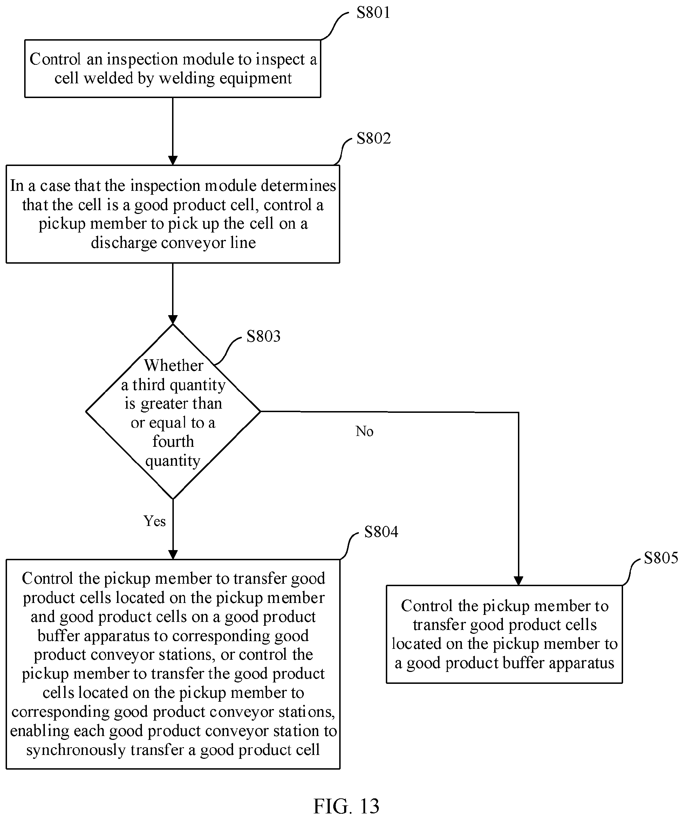

In some embodiments of this disclosure, the cell top cover rewelding reflow system further includes a good product buffer apparatus 9; and the good product conveyor line includes at least two good product conveyor stations; where the controlling the sorting module 2 to transfer the cell from the discharge conveyor line 3 to the good product conveyor line includes: controlling the pickup member 22 to pick up the cell on the discharge conveyor line 3; in a case that a sum of the number of good product cells on the pickup member 22 and the number of good product cells on the good product buffer apparatus 9 is less than the number of the good product conveyor stations, controlling the pickup member 22 to transfer the good product cells located on the pickup member 22 to the good product buffer apparatus 9; and in a case that the sum of the number of good product cells on the pickup member 22 and the number of good product cells on the good product buffer apparatus 9 is greater than or equal to the number of the good product conveyor stations, controlling the pickup member 22 to transfer the good product cells located on the pickup member 22 and the good product cells on the good product buffer apparatus 9 to corresponding good product conveyor stations, or controlling the pickup member 22 to transfer the good product cells located on the pickup member 22 to corresponding good product conveyor stations, enabling each good product conveyor station to synchronously transfer a good product cell. For convenience of description, the sum of the number of good product cells on the pickup member 22 and the number of good product cells on the good product buffer apparatus 9 is referred to below as a third quantity, and the number of the good product conveyor stations is referred to as a fourth quantity. In this embodiment, referring to FIG. 1, FIG. 4, and FIG. 13, the process of the sorting module 2 sorting good product cells includes:
S801. Control an inspection module to inspect a cell welded by the welding equipment;
S802. In a case that the inspection module determines that the cell is a good product cell, control the pickup member to pick up the cell on the discharge conveyor line;
S803. Determine whether the third quantity is greater than or equal to the fourth quantity;
S804. If yes, control the pickup member to transfer the good product cells located on the pickup member and the good product cells on the good product buffer apparatus to corresponding good product conveyor stations, or control the pickup member to transfer the good product cells located on the pickup member to corresponding good product conveyor stations, enabling each good product conveyor station to synchronously transfer a good product cell; and
S805. If no, control the pickup member to transfer the good product cells located on the pickup member to the good product buffer apparatus.

By providing at least two good product conveyor stations, production efficiency is improved. Moreover, since the good product buffer apparatus 9 can store good product cells, when a sufficient number of cells 01 are accumulated on the good product buffer apparatus 9, the good product cells can be transferred from the good product buffer apparatus 9 to the good product conveyor line 61, allowing each good product conveyor station to synchronously transfer a corresponding cell 01 to corresponding good product discharge position, reducing the idle rate of the good product conveyor stations, which is beneficial to improving production efficiency.

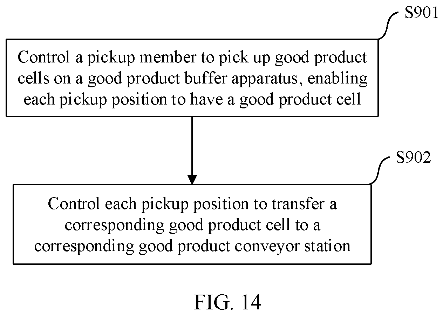

In some embodiments of this disclosure, the pickup member 22 includes at least two pickup positions, where the number of the pickup positions is equal to the number of the good product conveyor stations and the pickup positions are arranged in a one-to-one correspondence with the good product conveyor stations. Referring to FIG. 1, FIG. 4, and FIG. 14, controlling the pickup member 22 to transfer the good product cells located on the pickup member 22 and the good product cells on the good product buffer apparatus 9 to corresponding good product conveyor stations includes:
S901. Control the pickup member to pick up the good product cells on the good product buffer apparatus, enabling each pickup position to have a good product cell; and
S902. Control each pickup position to transfer a corresponding good product cell to a corresponding good product conveyor station.

By enabling the pickup member 22 to include at least two pickup positions, the pickup member 22 can synchronously transfer at least two cells 01 to corresponding good product conveyor stations, allowing each good product conveyor station to synchronously transfer a corresponding cell 01 to a corresponding good product discharge position, which is beneficial to improving production efficiency.

In some embodiments of this disclosure, for controlling the pickup member 22 to transfer the good product cells located on the pickup member 22 to corresponding good product conveyor stations, specifically, the discharge conveyor line 3 includes at least two discharge conveyor stations, where each discharge conveyor station is connected to the welding equipment to transfer a corresponding cell 01 from the welding equipment; the number of the discharge conveyor stations is equal to the number of the pickup positions and the discharge conveyor stations is arranged in a one-to-one correspondence with the pickup positions, and each pickup position is capable of moving relative to the first frame 21 to a position corresponding to a corresponding discharge conveyor station to pick up a cell 01 from the corresponding discharge conveyor station for transfer; in a case that the inspection module detects that cells 01 synchronously welded by all welding stations at one time are all good product cells, controlling the sorting module 2 to transfer the cells from the discharge conveyor line 3 to the good product conveyor line 61 includes: controlling each pickup position to pick up a good product cell from a corresponding discharge conveyor station, enabling each pickup position to have a good product cell; and controlling each pickup position to transfer the good product cell to a corresponding good product conveyor station.

By enabling the discharge conveyor line 3 to include at least two discharge conveyor stations, the efficiency of transferring cells 01 from the welding equipment via the discharge conveyor line 3 is improved, and the efficiency of the pickup member 22 picking up cells 01 from the discharge conveyor line 3 is also enhanced, which is beneficial to improving production efficiency.

Referring to FIG. 1, FIG. 3, FIG. 4, and FIG. 5, in some embodiments of this disclosure, the cell fixture 10 synchronously picks up two cells 01 from the welding equipment for clamping, and the discharge conveyor line 3 transfers the cell fixture 10 to transfer the cells 01. After the inspection module completes inspection, the cell fixture 10 carries the two cells 01 to a position corresponding to the sorting module 2, and the pickup member 22 sorts the cells 01 based on inspection results of the inspection module.

If both cells 01 are cells to be rewelded, the pickup member 22 synchronously transfers the two cells 01 to the reflow conveyor line 1, placing the two cells 01 onto two reflow conveyor stations 12, respectively, and the transplanting conveyor line 7 synchronously transfers the two cells 01 to the welding equipment.

If both cells 01 are good product cells, the pickup member 22 synchronously transfers the two cells 01 to the transplanting conveyor line 7, placing the two cells 01 onto two transplanting conveyor stations, respectively, and the transplanting conveyor line 7 synchronously transfers the two cells 01 to the good product conveyor line 61, which then synchronously transfers the two cells 01 to the good product discharge position.

If both cells 01 are defective product cells, the pickup member 22 synchronously transfers the two cells 01 to the transplanting conveyor line 7, placing the two cells 01 onto two transplanting conveyor stations, respectively, and the transplanting conveyor line 7 synchronously transfers the two cells 01 to the defective product conveyor line 62, which then synchronously transfers the two cells 01 to the defective product discharge position.

If one of the two cells 01 is a cell to be rewelded and the other is a good product or defective product cell, for the cell to be rewelded, the pickup member 22 places the cell to be rewelded onto the reflow buffer apparatus 4, or the pickup member 22 carries the cell to be rewelded to the reflow buffer apparatus 4 and picks up another cell to be rewelded on the reflow buffer apparatus 4, then synchronously moves with the two cells to be rewelded to the reflow conveyor line 1, placing the two cells to be rewelded synchronously onto the reflow conveyor line 1, with the two cells to be rewelded placed onto two reflow conveyor stations 12, respectively; for the good product cell, the pickup member 22 places the good product cell onto the good product buffer apparatus 9, or the pickup member 22 carries the good product cell to the good product buffer apparatus 9 and picks up another good product cell on the good product buffer apparatus 9, then synchronously moves with the two good product cells to the transplanting conveyor line 7, placing the two good product cells synchronously onto the transplanting conveyor line 7, with the two good product cells placed onto two transplanting conveyor stations, respectively, and the transplanting conveyor line 7 synchronously transfers the two good product cells to the good product conveyor line 61, which then synchronously transfers the two good product cells to the good product discharge positions; for the defective product cell, the pickup member 22 places the defective product cell onto the transplanting conveyor line 7, and the transplanting conveyor line 7 transfers the defective product cell to the defective product conveyor line 62, which then transfers the defective product cell to the defective product discharge position.

If one of the two cells 01 is a good product cell and the other is a defective product cell, for the good product cell, the pickup member 22 places the good product cell onto the good product buffer apparatus 9, or the pickup member 22 carries the good product cell to the good product buffer apparatus 9 to pick up another good product cell on the good product buffer apparatus 9, then synchronously moves with the two good product cells to the transplanting conveyor line 7, placing the two good product cells synchronously onto the transplanting conveyor line 7, with the two good product cells placed onto two transplanting conveyor stations, respectively, and the transplanting conveyor line 7 synchronously transfers the two good product cells to the good product conveyor line 61, which then synchronously transfers the two good product cells to the good product discharge positions; for the defective product cell, the pickup member 22 places the defective product cell onto the transplanting conveyor line 7, and the transplanting conveyor line 7 transfers the defective product cell to the defective product conveyor line 62, which then transfers the defective product cell to the defective product discharge position.

It should be noted that the above examples are merely intended for describing the technical solutions of this disclosure but not for limiting this application. Although this disclosure is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this disclosure. They should all be covered in the scope of the embodiments of this disclosure. In particular, as long as there is no structural conflict, the various technical features mentioned in the embodiments can be combined in any manner.

## Claims

1. A cell top cover rewelding reflow system comprising:
a discharge conveyor line wherein an input end is connected to welding equipment, and an output end extends toward a discharge position;
a reflow conveyor line disposed on one side of the discharge conveyor line wherein an output end of the reflow conveyor line is connected to the welding equipment; and a conveying direction of the discharge conveyor line is opposite to a conveying direction of the reflow conveyor line and the discharge conveyor line and the reflow conveyor line are arranged side by side; and
a sorting module comprising a first frame and a pickup member wherein the first frame the discharge conveyor line and the reflow conveyor line are relatively fixed, and the pickup member is movably disposed on the first frame to be capable of moving relative to the first frame to positions corresponding to the discharge conveyor line and the reflow conveyor line respectively, to transfer cells to be rewelded on the discharge conveyor line to the reflow conveyor line

2. The cell top cover rewelding reflow system according to claim **1,** wherein the first frame spans between the discharge conveyor line and the reflow conveyor line
wherein along an arrangement direction of the discharge conveyor line and the reflow conveyor line the pickup member is slidably connected to the first frame enabling the pickup member to move to positions aligned with the discharge conveyor line and the reflow conveyor line respectively, to transfer cells to be rewelded on the discharge conveyor line to the reflow conveyor line

3. The cell top cover rewelding reflow system according to claim 1 or 2, wherein the cell top cover rewelding reflow system further comprises a reflow buffer apparatus, wherein the reflow buffer apparatus is configured to store cells to be rewelded;
wherein the reflow buffer apparatus is located on one side of the discharge conveyor line and on one side of the reflow conveyor line and is relatively fixed to the first frame and the pickup member is capable of moving relative to the first frame to a position corresponding to the reflow buffer apparatus to pick up or place cells to be rewelded on the reflow buffer apparatus

4. The cell top cover rewelding reflow system according to claim 3, wherein the welding equipment comprises at least two welding stations, each welding station being configured to synchronously weld a corresponding cell top cover to a corresponding cell housing;
the reflow conveyor line comprises at least two reflow conveyor stations an output end of each reflow conveyor station being connected to a corresponding welding station to synchronously transfer a corresponding cell to the corresponding welding station; and
the pickup member is capable of moving relative to the first frame to positions corresponding to the discharge conveyor line and the reflow conveyor stations respectively, to transfer cells to be rewelded on the discharge conveyor line to the reflow conveyor stations

5. The cell top cover rewelding reflow system according to claim 4, wherein the pickup member comprises at least two pickup positions, the number of the pickup positions being equal to the number of the reflow conveyor stations and the pickup positions being arranged in a one-to-one correspondence with the reflow conveyor stations and each pickup position being relatively fixed and capable of moving relative to the first frame to a position corresponding to a corresponding reflow conveyor station to transfer a corresponding cell to the corresponding reflow conveyor station.

6. The cell top cover rewelding reflow system according to claim 5, wherein the discharge conveyor line comprises at least two discharge conveyor stations, each discharge conveyor station being connected to a corresponding welding station to synchronously transfer a corresponding cell from the corresponding welding station; wherein the number of the discharge conveyor stations is equal to the number of the pickup positions and the discharge conveyor stations are arranged in a one-to-one correspondence with the pickup positions, each pickup position being capable of moving relative to the first frame to a position corresponding to a corresponding discharge conveyor station to pick up a cell from the corresponding discharge conveyor station.

7. The cell top cover rewelding reflow system according to any one of claims 1 to 6, wherein the cell top cover rewelding reflow system further comprises a stopper mechanism, the stopper mechanism having a first posture and a second posture; wherein in a case of being in the first posture, the stopper mechanism abuts against the cells to be rewelded along the conveying direction of the reflow conveyor line to restrict the reflow conveyor line from driving the cells to be rewelded to move; and in a case of being in the second posture, the stopper mechanism avoids the cells to be rewelded, enabling the reflow conveyor line to drive the cells to be rewelded to move.

8. The cell top cover rewelding reflow system according to claim 7, wherein the number of the stopper mechanisms is at least two, the at least two stopper mechanisms being spaced apart along the conveying direction of the reflow conveyor line and a spacing between two adjacent stopper mechanisms being capable of accommodating a cell to be rewelded.

9. The cell top cover rewelding reflow system according to any one of claims 1 to 8, wherein the discharge position comprises a good product discharge position and a defective product discharge position;
wherein the cell top cover rewelding reflow system further comprises a good product conveyor line wherein the good product conveyor line is disposed on one side of the discharge conveyor line an output end of the good product conveyor line extending to the good product discharge position to transfer cells to the good product discharge position; and the pickup member being capable of moving relative to the first frame to positions corresponding to the discharge conveyor line and the good product conveyor line respectively, to transfer good product cells from the discharge conveyor line to the good product conveyor line
and/or, the cell top cover rewelding reflow system further comprises a defective product conveyor line wherein the defective product conveyor line is disposed on one side of the discharge conveyor line an output end of the defective product conveyor line extending to the defective product discharge position to transfer cells to the defective product discharge position; and the pickup member being capable of moving relative to the first frame to positions corresponding to the discharge conveyor line and the defective product conveyor line respectively, to transfer defective product cells from the discharge conveyor line to the defective product conveyor line

10. The cell top cover rewelding reflow system according to claim 9, wherein the good product conveyor line and/or the defective product conveyor line is arranged side by side with the discharge conveyor line

11. The cell top cover rewelding reflow system according to claim 10, wherein the cell top cover rewelding reflow system further comprises a transplanting conveyor line wherein a conveying direction of the transplanting conveyor line a conveying direction of the good product conveyor line and a conveying direction of the defective product conveyor line are parallel, the transplanting conveyor line being capable of transferring cells in two opposite directions along an extension path of the transplanting conveyor line
the transplanting conveyor line is disposed at positions corresponding to the good product conveyor line and the defective product conveyor line and two ends of the transplanting conveyor line are respectively configured to dock with the good product conveyor line and the defective product conveyor line to transfer cells to the good product conveyor line and the defective product conveyor line respectively; and
the pickup member is capable of moving relative to the first frame to positions corresponding to the discharge conveyor line and the transplanting conveyor line respectively, to transfer cells to the good product conveyor line and the defective product conveyor line via the transplanting conveyor line

12. The cell top cover rewelding reflow system according to claim 11, wherein along an arrangement direction of the good product conveyor line and the discharge conveyor line a spacing exists between the good product conveyor line and the defective product conveyor line
wherein the cell top cover rewelding reflow system further comprises a second frame along the arrangement direction of the good product conveyor line and the discharge conveyor line the second frame spanning between the good product conveyor line and the defective product conveyor line wherein the transplanting conveyor line is slidably connected to the second frame to be capable of moving to positions aligned with the good product conveyor line and the defective product conveyor line respectively, enabling two ends of the transplanting conveyor line to dock with the good product conveyor line and the defective product conveyor line respectively.

13. The cell top cover rewelding reflow system according to any one of claims 9 to 12, wherein the cell top cover rewelding reflow system further comprises a good product buffer apparatus wherein the good product buffer apparatus is configured to store good product cells;
wherein the good product buffer apparatus is relatively fixed to the first frame the pickup member being capable of moving relative to the first frame to a position corresponding to the good product buffer apparatus to pick up or place good product cells on the good product buffer apparatus

14. The cell top cover rewelding reflow system according to claim 13, wherein the number of the good product discharge positions is at least two;
wherein the good product conveyor line comprises at least two good product conveyor stations, each good product conveyor station extending to a corresponding good product discharge position to synchronously transfer a corresponding cell to the corresponding good product discharge position; and
the pickup member is capable of moving relative to the first frame to positions corresponding to the discharge conveyor line and the good product conveyor stations, respectively, to transfer good product cells from the discharge conveyor line to the good product conveyor stations.

15. The cell top cover rewelding reflow system according to claim 14, wherein the pickup member comprises at least two pickup positions, the number of the pickup positions being equal to the number of the good product conveyor stations and the pickup positions being arranged in a one-to-one correspondence with the good product conveyor stations; and each pickup position being relatively fixed and capable of moving relative to the first frame to a position corresponding to a corresponding good product conveyor station to transfer a corresponding cell to the corresponding good product conveyor station.

16. The cell top cover rewelding reflow system according to claim 15, wherein the discharge conveyor line comprises at least two discharge conveyor stations, each discharge conveyor station being connected to the welding equipment to transfer corresponding cells from the welding equipment; the number of the discharge conveyor stations being equal to the number of the pickup positions and the discharge conveyor stations being arranged in a one-to-one correspondence with the pickup positions; and each pickup position being capable of moving relative to the first frame to a position corresponding to a corresponding discharge conveyor station to pick up a cell from the corresponding discharge conveyor station for transfer.

17. A battery production line comprising:
welding equipment configured to weld a cell top cover to a cell housing to form a cell;
a discharge conveyor line wherein an input end is connected to the welding equipment, and an output end extends toward a discharge position;
a reflow conveyor line disposed on one side of the discharge conveyor line wherein an output end of the reflow conveyor line is connected to the welding equipment; and
a sorting module comprising a first frame and a pickup member wherein the first frame the discharge conveyor line and the reflow conveyor line are relatively fixed, and the pickup member is movably disposed on the first frame to be capable of moving relative to the first frame to positions corresponding to the discharge conveyor line and the reflow conveyor line respectively, to transfer cells to be rewelded on the discharge conveyor line to the reflow conveyor line

18. A cell top cover rewelding reflow method applied to the cell top cover rewelding reflow system according to any one of claims 1 to 16, the cell top cover rewelding reflow method comprising:
controlling an inspection module to inspect a cell welded by the welding equipment; and
in a case that the inspection module determines that the cell is a cell to be rewelded, controlling the sorting module to transfer the cell from the discharge conveyor line to the reflow conveyor line.

19. The cell top cover rewelding reflow method according to claim 18, wherein in a case that the inspection module determines that the cell is a cell to be rewelded, the cell top cover rewelding reflow method further comprises: controlling a manufacturing execution system to generate first marking data based on inspection results of the inspection module, the first marking data corresponding to characteristic information of the cell and indicating that the cell is a cell to be rewelded;
wherein the controlling the sorting module to transfer the cell from the discharge conveyor line to the reflow conveyor line comprises: controlling a collector of the sorting module to collect the characteristic information, and in a case that the characteristic information corresponds to the first marking data, controlling the pickup member to transfer the cell from the discharge conveyor line to the reflow conveyor line.

20. The cell top cover rewelding reflow method according to claim 19, wherein the cell top cover rewelding reflow method further comprises:
in a case that the cell to be rewelded is located on the reflow conveyor line, controlling the manufacturing execution system to delete the first marking data of the cell and generate second marking data, the second marking data corresponding to the characteristic information of the cell and indicating that the cell has not been welded.

21. The cell top cover rewelding reflow method according to any one of claims 18 to 20, wherein the cell top cover rewelding reflow system further comprises a reflow buffer apparatus; the reflow conveyor line comprises at least two reflow conveyor stations; and the controlling the sorting module to transfer the cell from the discharge conveyor line to the reflow conveyor line comprises:
controlling the pickup member to pick up the cell on the discharge conveyor line;
in a case that a sum of the number of cells to be rewelded on the pickup member and the number of cells to be rewelded on the reflow buffer apparatus is less than the number of the reflow conveyor stations, controlling the pickup member to transfer the cells to be rewelded located on the pickup member to the reflow buffer apparatus; and
in a case that the sum of the number of cells to be rewelded on the pickup member and the number of cells to be rewelded on the reflow buffer apparatus is greater than or equal to the number of the reflow conveyor stations, controlling the pickup member to transfer the cells to be rewelded located on the pickup member and the cells to be rewelded on the reflow buffer apparatus to corresponding reflow conveyor stations, or controlling the pickup member to transfer the cells to be rewelded located on the pickup member to corresponding reflow conveyor stations, enabling each reflow conveyor station to synchronously transfer a cell to be rewelded.

22. The cell top cover rewelding reflow method according to claim 21, wherein the pickup member comprises at least two pickup positions, the number of the pickup positions being equal to the number of the reflow conveyor stations and the pickup positions being arranged in a one-to-one correspondence with the reflow conveyor stations;
wherein the controlling the pickup member to transfer the cells to be rewelded located on the pickup member and the cells to be rewelded on the reflow buffer apparatus to corresponding reflow conveyor stations comprises:
controlling the pickup member to pick up the cells to be rewelded on the reflow buffer apparatus, enabling each pickup position to have a cell to be rewelded; and
controlling each pickup position to transfer a corresponding cell to be rewelded to a corresponding reflow conveyor station.

23. The cell top cover rewelding reflow method according to any one of claims 18 to 20, wherein the cell top cover rewelding reflow system further comprises a good product conveyor line and a defective product conveyor line;
wherein the cell top cover rewelding reflow method further comprises: in a case that the inspection module determines that the cell is a good product cell, controlling the sorting module to transfer the cell from the discharge conveyor line to the good product conveyor line;
and/or, in a case that the inspection module determines that the cell is a defective product cell, controlling the sorting module to transfer the cell from the discharge conveyor line to the defective product conveyor line.

24. The cell top cover rewelding reflow method according to claim 23, wherein the cell top cover rewelding reflow system further comprises a good product buffer apparatus; and the good product conveyor line comprises at least two good product conveyor stations;
wherein the controlling the sorting module to transfer the cell from the discharge conveyor line to the good product conveyor line comprises:
controlling the pickup member to pick up the cell on the discharge conveyor line;
in a case that a sum of the number of good product cells on the pickup member and the number of good product cells on the good product buffer apparatus is less than the number of the good product conveyor stations, controlling the pickup member to transfer the good product cells located on the pickup member to the good product buffer apparatus; and
in a case that the sum of the number of good product cells on the pickup member and the number of good product cells on the good product buffer apparatus is greater than or equal to the number of the good product conveyor stations, controlling the pickup member to transfer the good product cells located on the pickup member and the good product cells on the good product buffer apparatus to corresponding good product conveyor stations, or controlling the pickup member to transfer the good product cells located on the pickup member to corresponding good product conveyor stations, enabling each good product conveyor station to synchronously transfer a good product cell.

25. The cell top cover rewelding reflow method according to claim 24, wherein the pickup member comprises at least two pickup positions, the number of the pickup positions being equal to the number of the good product conveyor stations and the pickup positions are arranged in a one-to-one correspondence with the good product conveyor stations;
wherein the controlling the pickup member to transfer the good product cells located on the pickup member and the good product cells on the good product buffer apparatus to corresponding good product conveyor stations comprises:
controlling the pickup member to pick up the good product cells on the good product buffer apparatus, enabling each pickup position to have a good product cell; and
controlling each pickup position to transfer a corresponding good product cell to a corresponding good product conveyor station.
